(19)

**Europäisches Patentamt**
**European Patent Office**
**Office européen des brevets**

(11) **EP 4 694 048 A1**

(12) **EUROPEAN PATENT APPLICATION**
published in accordance with Art. 153(4) EPC

(43) Date of publication:
**11.02.2026 Bulletin 2026/07**

(21) Application number: **24799850.3**

(22) Date of filing: **08.04.2024**

(51) International Patent Classification (IPC):
*H04L 27/36* (2006.01)

(52) Cooperative Patent Classification (CPC):
**H04L 9/40; H04L 27/36; H04L 27/38**

(86) International application number:
**PCT/CN2024/086583**

(87) International publication number:
**WO 2024/227392 (07.11.2024 Gazette 2024/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.05.2023 CN 202310503376**

(71) Applicant: **Huawei Technologies Co., Ltd.**
**Shenzhen, Guangdong 518129 (CN)**

(72) Inventors:
• **HUANG, Li**
**Shenzhen, Guangdong 518129 (CN)**
• **SHI, Dai**
**Shenzhen, Guangdong 518129 (CN)**
• **XIONG, Xiaochun**
**Shenzhen, Guangdong 518129 (CN)**

(74) Representative: **Isarpatent**
**Patent- und Rechtsanwälte Partg mbB**
**Friedrichstraße 31**
**80801 München (DE)**

(54) **COMMUNICATION METHOD AND APPARATUS**

(57) This application provides a communication method and apparatus. The method includes: A first communication apparatus may modulate M to-be-sent bits by using a constellation diagram, to obtain a first modulation symbol, and modulate N bits by using the constellation diagram, to obtain a second modulation symbol, where a first bit sequence and a second bit sequence have different values at a first location, and a third bit sequence and a fourth bit sequence are the same; or a first bit sequence and a second bit sequence are the same, and a third bit sequence and a fourth bit sequence have different values at a second location; and the first bit sequence is a bit sequence corresponding to a real part of the first modulation symbol, the second bit sequence is a bit sequence corresponding to a real part of the second modulation symbol, the third bit sequence is a bit sequence corresponding to an imaginary part of the first modulation symbol, the fourth bit sequence is a bit sequence corresponding to an imaginary part of the second modulation symbol, and the first modulation symbol and the second modulation symbol are symmetrical along a horizontal axis or a vertical axis of the constellation diagram. In this way, randomness of bit sequences corresponding to two adjacent modulation symbols in the constellation diagram is improved, and difficulty in illegally demodulating a transmitted modulation symbol is increased, thereby improving security of communication between the first communication apparatus and the second communication apparatus.

FIG. 4

**Description**

CROSS-REFERENCE TO RELATED APPLICATIONS

This application claims priority to Chinese Patent Application No. 202310503376.3, filed with the China National Intellectual Property Administration on May 4, 2023 and entitled "COMMUNICATION METHOD AND APPARATUS", which is incorporated herein by reference in its entirety.

TECHNICAL FIELD

Embodiments of this application relate to the field of communication technologies, and in particular, to a communication method and apparatus.

BACKGROUND

Constellation mapping is a digital modulation technology. Constellation mapping may be implemented by using a constellation diagram. The constellation diagram defines a mapping relationship between bits and modulation symbols, and a to-be-transmitted bit may be mapped to a modulation symbol suitable for actual channel transmission by using the constellation diagram. The constellation diagram may be understood as a set of modulation symbols. Each modulation symbol in the constellation diagram may be considered as one constellation point (or referred to as "point" for short), each modulation symbol corresponds to one bit sequence, and one bit sequence includes one or more bits. In constellation mapping, a transmitter may modulate a bit sequence by using the constellation diagram to obtain a modulation symbol, and send the modulation symbol through a channel. A receiver may demodulate, by using the constellation diagram, the modulation symbol received through the channel, to obtain the bit sequence.

Currently, the constellation diagram generally complies with a Gray code (gray code) mapping rule. The Gray code mapping rule means that a Hamming distance between two adjacent modulation symbols in the constellation diagram is 1. In other words, in bit sequences corresponding to two adjacent modulation symbols, values of bits at only one location are different, and values of bits at another location are the same. An advantage of using this constellation diagram for modulation is that even if a demodulation error occurs at the receiver, a bit error generally occurs at only a small quantity of locations. This helps ensure a low bit error rate at the receiver. However, because values of bits at only one location are different in bit sequences corresponding to two adjacent modulation symbols, the modulation symbols are likely to be illegally demodulated by an eavesdropper, resulting in low communication security.

SUMMARY

Embodiments of this application provide a communication method and apparatus, to improve communication security.

According to a first aspect, an embodiment of this application provides a communication method, and the method may be performed by a first communication apparatus. The first communication apparatus is, for example, a terminal device, a software module in the terminal device, a hardware module (for example, a chip, and specifically, a baseband chip) in the terminal device, a network device, a software module in the network device, or a hardware module (for example, a chip) in the network device. The method includes: modulating M bits based on a constellation diagram to obtain a first modulation symbol, and modulating N bits based on the constellation diagram to obtain a second modulation symbol, where both M and N are positive integers; and sending the first modulation symbol and the second modulation symbol to a second communication apparatus, where a first bit sequence and a second bit sequence have different values at a first location, and a third bit sequence and a fourth bit sequence are the same; or a first bit sequence and a second bit sequence are the same, and a third bit sequence and a fourth bit sequence have different values at a second location; and the first bit sequence is a bit sequence corresponding to a real part of the first modulation symbol, the second bit sequence is a bit sequence corresponding to a real part of the second modulation symbol, the third bit sequence is a bit sequence corresponding to an imaginary part of the first modulation symbol, the fourth bit sequence is a bit sequence corresponding to an imaginary part of the second modulation symbol, the first location is a location of any bit in the first bit sequence or the second bit sequence, the second location is a location of any bit in the third bit sequence or the fourth bit sequence, and the first modulation symbol and the second modulation symbol are symmetrical along a horizontal axis or a vertical axis of the constellation diagram.

In this embodiment of this application, bit sequences corresponding to modulation symbols (for example, the first modulation symbol and the second modulation symbol) that are symmetrical along the horizontal axis or the vertical axis of the constellation diagram are designed from the two modulation symbols, instead of designing the constellation diagram by using a Gray code mapping rule. This improves randomness of a Hamming distance between bit sequences corresponding to two adjacent modulation symbols in the constellation diagram, so that arrangement randomness of the bit sequences corresponding to the two adjacent modulation symbols is higher. In this way, difficult for an eavesdropper to demodulate a modulation symbol obtained through modulation based on the foregoing constellation diagram is increased, a risk of leakage of the transmitted modulation symbol is reduced, and communication security is improved.

In a possible implementation, before sending the first modulation symbol and the second modulation symbol to the second communication apparatus, the method further includes: encrypting the first modulation symbol based on a first key, to obtain the encrypted first modulation symbol; and/or encrypting the second modulation symbol based on a second key, to obtain the encrypted second modulation symbol.

In the foregoing implementation, the first communication apparatus may encrypt the first modulation symbol and/or the second modulation symbol, thereby further reducing a probability of illegal demodulation by an eavesdropper, and helping improve communication security.

In a possible implementation, the first key and/or the second key are/is generated based on first information, and the first information includes a third key; and the third key is a preconfigured or predefined key, or the third key is generated based on a fourth key, and the fourth key is a preconfigured or predefined key or a key configured by a core network. Configuration by the core network is, for example, configuration by an access and mobility management function (access and mobility management function, AMF) in the core network.

In the foregoing implementation, a plurality of manners of generating the first key and/or the second key are provided. In addition, because the third key in the first information may be preconfigured or predefined, the first key generated based on the first information is relatively stable. Alternatively, the first communication apparatus may generate the first key based on the first information including the third key. The third key may be generated based on the fourth key. Because the fourth key is also preconfigured, predefined, or received from a core network element, stability of the first key is also ensured. In addition, the first key may be considered as being obtained by performing calculation on the fourth key twice. This increases complexity of generating the first key, and reduces a possibility of illegally generating the first key, that is, improves security of the first key. Therefore, communication security is improved.

In a possible implementation, the third key is a key shared by the first communication apparatus and the second communication apparatus.

In the foregoing implementation, both the first communication apparatus and the second communication apparatus share the third key, so that the first communication apparatus and the second communication apparatus generate a consistent first key, thereby ensuring that the second communication apparatus can smoothly decrypt the second modulation symbol and the like, and ensuring reliability of communication between the first communication apparatus and the second communication apparatus.

In a possible implementation, the first information further includes information that has been sent by the first communication apparatus to the second communication apparatus and/or information that has been received by the first communication apparatus from the second communication apparatus.

In the foregoing implementation, in addition to the third key, the first information may further include information transmitted between the first communication apparatus and the second communication apparatus. Because some random deviations exist in the information transmitted between the first communication apparatus and the second communication apparatus, a possibility that an eavesdropper obtains the same first information to generate a key is reduced, that is, a possibility of illegally generating the first key and/or the second key is reduced, and this also helps improve communication security.

In a possible implementation, the method further includes: encrypting the first information based on a first encryption algorithm, to obtain a fifth key; and encrypting the fifth key based on a second encryption algorithm, to obtain a sixth key, where the first key is a part or all of bits in the sixth key, or the first key is a part or all of bits in a seventh key, and the seventh key is determined based on the fifth key and the sixth key.

In the foregoing implementation, the first communication apparatus may sequentially encrypt the first information twice to obtain the sixth key, thereby improving complexity of generating the sixth key, and improving security of the first key. In addition, the first key may be a part or all of the bits of the sixth key or the seventh key, and a plurality of possible forms of the first key are provided.

In a possible implementation, the second key is a part or all of bits other than the first key in the sixth key, or a part or all of bits other than the first key in the seventh key.

In the foregoing implementation, a part or all of bits other than the first key in the sixth key or the seventh key may be used as the second key. This is equivalent to that the first communication apparatus can obtain, by performing calculation once, a key used to encrypt a plurality of modulation symbols, helping reduce a quantity of key calculation times of the first communication apparatus.

In a possible implementation, encrypting the first modulation symbol based on the first key, to obtain the encrypted first modulation symbol includes: determining a translation length and/or a direction angle of the first modulation symbol in the constellation diagram based on the first key; and shifting the first modulation symbol in the constellation diagram by the translation length in a direction indicated by the direction angle, to obtain the encrypted first modulation symbol; or superimposing a phase of a third modulation symbol onto a phase of the first modulation symbol, to obtain the encrypted first modulation symbol, where the third modulation symbol is obtained by modulating the first key based on the constellation diagram.

In the foregoing implementation, two manners of encrypting the first modulation symbol are provided, thereby enriching manners of encrypting the first modulation symbol. In addition, because both the first communication apparatus and the second communication apparatus may generate a relatively stable first key based on the first information, it is ensured that the second communication apparatus can smoothly decrypt a modulation symbol encrypted by the first communication apparatus, and reliability of communication between the first communication apparatus and the second communication apparatus is ensured.

In a possible implementation, the translation length and the direction angle satisfy the following relationship:

$$\rho\cos\theta > 1/\sqrt{2} \ \text{ and } \ \rho\sin\theta > 1/\sqrt{2};$$

or

$$\rho\cos\theta > 5/\sqrt{10} \ \text{ and } \ \rho\sin\theta > 5/\sqrt{10}, \text{ where}$$

where

$\rho$ represents the translation length, and $\theta$ represents the direction angle.

In the foregoing implementation, the translation length and the direction angle may satisfy the foregoing condition, so that encryption security of the first communication apparatus can be ensured.

According to a second aspect, an embodiment of this application provides a communication method, and the method may be performed by a second communication apparatus. The second communication apparatus is, for example, a terminal device, a software module in the terminal device, a hardware module (for example, a chip, and specifically, a baseband chip) in the terminal device, a network device, a software module in the network device, or a hardware module (for example, a chip) in the network device. In this embodiment of this application, the second communication apparatus is used as a receiver or a receiving device for description. The method includes: receiving a first modulation symbol and a second modulation symbol from a first communication apparatus; and demodulating the first modulation symbol based on a constellation diagram to obtain M bits, and demodulating the second modulation symbol based on the constellation diagram to obtain N bits, where N and M are positive integers, where a first bit sequence and a second bit sequence have different values at a first location, and a third bit sequence and a fourth bit sequence are the same; or a first bit sequence and a second bit sequence are the same, and a third bit sequence and a fourth bit sequence have different values at a second location; and the first bit sequence is a bit sequence corresponding to a real part of the first modulation symbol, the second bit sequence is a bit sequence corresponding to a real part of the second modulation symbol, the third bit sequence is a bit sequence corresponding to an imaginary part of the first modulation symbol, the fourth bit sequence is a bit sequence corresponding to an imaginary part of the second modulation symbol, the first location is a location of any bit in the first bit sequence or the second bit sequence, the second location is a location of any bit in the third bit sequence or the fourth bit sequence, and the first modulation symbol and the second modulation symbol are symmetrical along a horizontal axis or a vertical axis of the constellation diagram.

In a possible implementation, receiving the first modulation symbol and the second modulation symbol from the first communication apparatus includes: receiving the encrypted first modulation symbol and the encrypted second modulation symbol from the first communication apparatus; and the method further includes: decrypting the encrypted first modulation symbol based on a first key, to obtain the first modulation symbol; and/or decrypting the encrypted second modulation symbol based on a second key, to obtain the second modulation symbol.

In a possible implementation, the first key and/or the second key are/is generated based on first information, and the first information includes a third key; and the third key is a preconfigured or predefined key, or the third key is generated based on an eighth key, and the eighth key is a preconfigured or predefined key or a key configured by a core network. Optionally, a key configured by the core network is, for example, configured by an AMF in the core network.

In a possible implementation, the third key is a key shared by the first communication apparatus and the second communication apparatus.

In a possible implementation, the first information further includes information that has been sent by the second communication apparatus to the first communication apparatus and/or information that has been received by the second communication apparatus from the first communication apparatus.

In a possible implementation, the method further includes: encrypting the first information based on a first encryption algorithm, to obtain a fifth key; and encrypting the fifth key based on a second encryption algorithm, to obtain a sixth key, where the first key is a part or all of bits in the sixth key, or the first key is a part or all of bits in a seventh key, and the seventh key is determined based on the fifth key and the sixth key.

In a possible implementation, the second key is a part or all of bits other than the first key in the sixth key, or a part or all of bits other than the first key in the seventh key.

In a possible implementation, decrypting the encrypted first modulation symbol based on the first key, to obtain the first modulation symbol includes: determining a translation length and/or a direction angle of the first modulation symbol in the constellation diagram based on the first key; and shifting the encrypted first modulation symbol in the constellation diagram by the translation length in a direction opposite to a direction indicated by the direction angle, to obtain the first modulation symbol; or subtracting a phase of a third modulation symbol from a phase of the encrypted first modulation symbol, to obtain the first modulation symbol, where the third modulation symbol is obtained by modulating the first key based on the constellation diagram.

In a possible implementation, the translation length and the direction angle satisfy the following relationship:

$$\rho\cos\theta > 1/\sqrt{2} \ \text{ and } \ \rho\sin\theta > 1/\sqrt{2};$$

or

$$\rho\cos\theta > 5/\sqrt{10} \ \text{ and } \ \rho\sin\theta > 5/\sqrt{10},$$

where
$\rho$ represents the translation length, and $\theta$ represents the direction angle.

According to a third aspect, an embodiment of this application provides a communication method, and the method may be performed by a communication system. The communication system includes a first communication apparatus and a second communication apparatus. For an implementation of the first communication apparatus, refer to content of the first communication apparatus in the first aspect and content of the second communication apparatus in the second aspect. Details are not described herein again. The method includes the first aspect and any possible implementation performed by the first communication apparatus, and the second aspect and any possible implementation performed by the second communication apparatus.

According to a fourth aspect, an embodiment of this application provides a communication method, and the method may be performed by a first communication apparatus. For an implementation of the first communication apparatus, refer to the foregoing content of the implementation of the first communication apparatus in the first aspect. Details are not described herein again. The method includes: modulating M bits based on a constellation diagram to obtain a first modulation symbol, where M is a positive integer; and sending the first modulation symbol to a second communication apparatus. The constellation diagram satisfies: Two bit sequences corresponding to real parts of any two modulation symbols that are symmetrical along a horizontal axis are the same, and values of bits at an $i^{th}$ location in two bit sequences corresponding to imaginary parts are different; and/or values of bits at a $j^{th}$ location in two bit sequences corresponding to real parts of any two modulation symbols that are symmetrical along a vertical axis in the constellation diagram are different, and two bit sequences corresponding to imaginary parts are the same, where i and j are positive integers. Alternatively, values of bits at a $j^{th}$ location in two bit sequences corresponding to real parts of any two modulation symbols that are symmetrical along a horizontal axis are different, and two bit sequences corresponding to imaginary parts are the same; and/or two bit sequences corresponding to real parts of any two modulation symbols that are symmetrical along a vertical axis in the constellation diagram are the same, and values of bits at an $i^{th}$ location in two bit sequences corresponding to imaginary parts are different, where i and j are positive integers.

When the constellation diagram satisfies the foregoing condition, any two modulation symbols that are symmetrical along the horizontal axis or the vertical axis and that are modulated by the first communication apparatus by using the constellation diagram also satisfy the foregoing corresponding condition. For example, the first modulation symbol and the second modulation symbol in the first aspect satisfy a corresponding condition satisfied by the constellation diagram in this embodiment of this application. The first aspect may be considered as an example in which the condition satisfied by the constellation diagram is described based on two modulation symbols that are symmetrical along the horizontal axis or the vertical axis and that are modulated by the first communication apparatus.

In this embodiment of this application, the constellation diagram is used, so that randomness of a Hamming distance between bit sequences corresponding to two adjacent modulation symbols in the constellation diagram is higher, and arrangement randomness of bit sequences corresponding to two adjacent modulation symbols in the constellation diagram is improved. In this way, difficulty for an eavesdropper to demodulate a modulation symbol obtained through modulation based on the constellation diagram is increased, a risk of leakage of a transmitted bit is reduced, and communication security is improved.

In a possible implementation, sending the first modulation symbol to the second communication apparatus includes: encrypting the first modulation symbol based on a first key, to obtain the encrypted first modulation symbol, and sending the encrypted first modulation symbol to the second communication apparatus.

In a possible implementation, the first key is generated based on first information, and the first information includes a third key, where the third key is a preconfigured or predefined key, or a second key is generated based on a fourth key, and the fourth key is a preconfigured or predefined key, or is configured by a core network. Optionally, the core network is, for example, an AMF.

In a possible implementation, the third key is a key shared by the first communication apparatus and the second communication apparatus.

In a possible implementation, the first information further includes information that has been sent by the first communication apparatus to the second communication apparatus and/or information that has been received by the first communication apparatus from the second communication apparatus.

In a possible implementation, the method further includes: encrypting the first information based on a first encryption algorithm, to obtain a fifth key; and encrypting the fifth key based on a second encryption algorithm, to obtain a sixth key, where the first key is a part or all of bits in the sixth key, or the first key is a part or all of bits in a seventh key, and the seventh key is determined based on the fifth key and the sixth key. The first encryption algorithm is the same as or different from the second encryption algorithm.

In a possible implementation, when the first key is a part of bits in the sixth key or the seventh key, the method further includes: modulating N bits based on the constellation diagram to obtain a second modulation symbol, where N is a positive integer; encrypting the second modulation symbol based on a part or all of bits other than the part of bits of the first key in the sixth key, or based on a part or all of bits other than the part of bits of the first key in the seventh key, to obtain the encrypted second modulation symbol; and sending the encrypted second modulation symbol to the second communication apparatus.

In a possible implementation, encrypting the first modulation symbol based on the first key, to obtain the encrypted first modulation symbol includes: determining a translation length and/or a direction angle of the first modulation symbol in the constellation diagram based on the first key; and shifting the first modulation symbol in the constellation diagram by the translation length in a direction indicated by the direction angle, to obtain the encrypted first modulation symbol; or superimposing a phase of a third modulation symbol onto a phase of the first modulation symbol, to obtain the encrypted first modulation symbol, where the third modulation symbol is obtained by modulating the first key based on the constellation diagram.

In a possible implementation, the translation length and the direction angle satisfy the following relationship:

$$\rho\cos\theta > 1/\sqrt{2} \ \text{ and } \ \rho\sin\theta > 1/\sqrt{2};$$

or

$$\rho\cos\theta > 5/\sqrt{10} \ \text{ and } \ \rho\sin\theta > 5/\sqrt{10},$$

where

$\rho$ represents the translation length, and $\theta$ represents the direction angle.

According to a fifth aspect, an embodiment of this application provides a communication method, and the method may be performed by a second communication apparatus. For an implementation of the second communication apparatus, refer to the content described in the second aspect. The method includes: receiving a first modulation symbol from a first communication apparatus, and demodulating the first modulation symbol based on a constellation diagram, to obtain M bits, where M is a positive integer. The constellation diagram satisfies: Two bit sequences corresponding to real parts of any two modulation symbols that are symmetrical along a horizontal axis are the same, and values of bits at an $i^{th}$ location in two bit sequences corresponding to imaginary parts are different; and/or values of bits at a $j^{th}$ location in two bit sequences corresponding to real parts of any two modulation symbols that are symmetrical along a vertical axis in the constellation diagram are different, and two bit sequences corresponding to imaginary parts are the same, where i and j are positive integers. Alternatively, values of bits at a $j^{th}$ location in two bit sequences corresponding to real parts of any two modulation symbols that are symmetrical along a horizontal axis are different, and two bit sequences corresponding to imaginary parts are the same; and/or two bit sequences corresponding to real parts of any two modulation symbols that are symmetrical along a vertical axis in the constellation diagram are the same, and values of bits at an $i^{th}$ location in two bit sequences corresponding to imaginary parts are different, where i and j are positive integers.

In a possible implementation, receiving the first modulation symbol from the first communication apparatus includes: receiving the encrypted first modulation symbol from the first communication apparatus; and the method further includes: decrypting the encrypted first modulation symbol, to obtain the first modulation symbol.

In a possible implementation, the first key is generated based on first information, and the first information includes a third key; and the third key is a preconfigured or predefined key, or a second key is generated based on an eighth key, and the eighth key is a preconfigured or predefined key or a key configured by a core network. Optionally, the core network is, for example, an AMF.

In a possible implementation, the third key is a key shared by the first communication apparatus and the second communication apparatus.

In a possible implementation, the first information further includes information that has been sent by the second communication apparatus to the first communication apparatus and/or information that has been received by the second communication apparatus from the first communication apparatus.

In a possible implementation, the method further includes: encrypting the first information based on a first encryption algorithm, to obtain a fifth key; and encrypting the fifth key based on a second encryption algorithm, to obtain a sixth key, where the first key is a part or all of bits in the sixth key, or the first key is a part or all of bits in a seventh key, and the seventh key is determined based on the fifth key and the sixth key.

In a possible implementation, the method further includes: receiving an encrypted second modulation symbol; decrypting the encrypted second modulation symbol based on a part of bits other than the part of bits of the first key in the sixth key or based on a part of bits other than the part of bits of the first key in the seventh key, to obtain the second modulation symbol; and demodulating the second modulation symbol based on the constellation diagram, to obtain N bits, where N is a positive integer.

In a possible implementation, decrypting the encrypted modulation symbol based on the first key, to obtain the first modulation symbol includes: determining a translation length and/or a direction angle of the first modulation symbol in the constellation diagram based on the first key; and shifting the encrypted first modulation symbol in the constellation diagram by the translation length in a direction opposite to a direction indicated by the direction angle, to obtain the first modulation symbol; or subtracting a phase of a third modulation symbol from a phase of the encrypted first modulation symbol, to obtain the first modulation symbol, where the third modulation symbol is obtained by modulating the first key based on the constellation diagram.

In a possible implementation, the translation length and the direction angle satisfy the following condition:

$$\rho\cos\theta > 1/\sqrt{2} \ \ \text{and} \ \ \rho\sin\theta > 1/\sqrt{2};$$

or

$$\rho\cos\theta > 5/\sqrt{10} \ \ \text{and} \ \ \rho\sin\theta > 5/\sqrt{10},$$

where

$\rho$ represents the translation length, and $\theta$ represents the direction angle.

According to a sixth aspect, an embodiment of this application provides a communication method, and the method may be performed by a communication system. The communication system includes a first communication apparatus and a second communication apparatus. For an implementation of the first communication apparatus, refer to content of the first communication apparatus in the third aspect and content of the second communication apparatus in the fourth aspect. Details are not described herein again. The method includes the third aspect and any possible implementation performed by the first communication apparatus, and the fourth aspect and any possible implementation performed by the second communication apparatus.

According to a seventh aspect, an embodiment of this application provides a communication method. The method may be performed by a communication system. The communication system includes a first communication apparatus and a second communication apparatus. For an implementation form of the first communication apparatus, refer to the content described in the first aspect. For an implementation of the second communication apparatus, refer to the content described in the second aspect. The method includes: The first communication apparatus modulates M bits based on a constellation diagram to obtain a first modulation symbol; encrypts the first modulation symbol based on a first key, to obtain the encrypted first modulation symbol, where the first key is generated by the first communication apparatus based on first information, and the first information includes a third key; and sends the encrypted first modulation symbol to the second communication apparatus. The second communication apparatus decrypts the encrypted first modulation symbol based on the first key, to obtain the first modulation symbol, where the first key is generated by the second communication apparatus based on the first information, and the third key is a key shared by the first communication apparatus and the second communication apparatus; and the second communication apparatus demodulates the first modulation symbol based on the constellation diagram, to obtain the M bits.

Compared with a solution in which the modulation symbol is not encrypted, in this embodiment of this application, the modulation symbol is encrypted by using the first key, thereby improving communication security. In addition, the first communication apparatus and the second communication apparatus share the third key, and both can generate the first key based on the third key. In this way, both the first communication apparatus and the second communication apparatus can generate a relatively stable first key, and the second communication apparatus can smoothly decrypt the encrypted first modulation symbol, thereby ensuring reliability of communication between the first communication apparatus and the second communication apparatus.

In a possible implementation, the third key is a preconfigured or predefined key, or the third key is generated by the first communication apparatus based on a fourth key, and the fourth key is a preconfigured or predefined key or a key configured by a core network.

In the foregoing implementation, several manners of obtaining the second key by the first communication apparatus are provided.

In a possible implementation, the third key is a preconfigured or predefined key, or the third key is generated by the second communication apparatus based on an eighth key, and the eighth key is a preconfigured or predefined key or a key configured by a core network.

In the foregoing implementation, several manners of obtaining the third key by the second communication apparatus are provided.

In a possible implementation, the fourth key and the eighth key may be the same or different. For example, the fourth key is a preconfigured or predefined key, and the eighth key is received from a core network element; or the fourth key is configured by the core network, and the eighth key is a preconfigured or predefined key.

In a possible implementation, the first information further includes information that has been sent by the first communication apparatus to the second communication apparatus and/or information that has been received by the first communication apparatus from the second communication apparatus.

In a possible implementation, the method further includes: The first communication apparatus or the second communication apparatus encrypts the first information based on a first encryption algorithm, to obtain a fifth key; and encrypts the fifth key based on a second encryption algorithm, to obtain a sixth key, where the first key is a part or all of bits in the sixth key, or the first key is a part or all of bits in a seventh key, and the seventh key is determined based on the fifth key and the sixth key.

In a possible implementation, the constellation diagram satisfies: Two bit sequences corresponding to real parts of any two modulation symbols that are symmetrical along a horizontal axis are the same, and values of bits at an $i^{th}$ location in two bit sequences corresponding to imaginary parts are different; and/or values of bits at a $j^{th}$ location in two bit sequences corresponding to real parts of any two modulation symbols that are symmetrical along a vertical axis in the constellation diagram are different, and two bit sequences corresponding to imaginary parts are the same, where i and j are positive integers. Alternatively, values of bits at a $j^{th}$ location in two bit sequences corresponding to real parts of any two modulation symbols that are symmetrical along a horizontal axis are different, and two bit sequences corresponding to imaginary parts are the same; and/or two bit sequences corresponding to real parts of any two modulation symbols that are symmetrical along a vertical axis in the constellation diagram are the same, and values of bits at an $i^{th}$ location in two bit sequences corresponding to imaginary parts are different, where i and j are positive integers.

In a possible implementation, that the first communication apparatus encrypts the first modulation symbol based on the first key, to obtain the encrypted first modulation symbol includes: determining a translation length and/or a direction angle of the first modulation symbol in the constellation diagram based on the first key; and shifting the first modulation symbol in the constellation diagram by the translation length in a direction indicated by the direction angle, to obtain the encrypted first modulation symbol; or superimposing a phase of a third modulation symbol onto a phase of the first modulation symbol, to obtain the encrypted first modulation symbol, where the third modulation symbol is obtained by modulating the first key based on the constellation diagram.

In a possible implementation, the translation length and the direction angle satisfy the following condition:

$$\rho\cos\theta > 1/\sqrt{2} \ \text{ and } \ \rho\sin\theta > 1/\sqrt{2};$$

or

$$\rho\cos\theta > 5/\sqrt{10} \ \text{ and } \ \rho\sin\theta > 5/\sqrt{10},$$

where

$\rho$ represents the translation length, and $\theta$ represents the direction angle.

In a possible implementation, the method further includes: The second communication apparatus receives an encrypted second modulation symbol; decrypts the encrypted second modulation symbol based on a part of bits other than the part of bits of the first key in the sixth key or based on a part of bits other than the part of bits of the first key in the seventh key, to obtain the second modulation symbol; and demodulates the second modulation symbol based on the constellation diagram, to obtain N bits, where N is a positive integer.

In a possible implementation, that the second communication apparatus decrypts the encrypted first modulation symbol based on the first key, to obtain the first modulation symbol includes: The second communication apparatus determines a translation length and/or a direction angle of the first modulation symbol in the constellation diagram based on the first key; and shifts the encrypted first modulation symbol in the constellation diagram by the translation length in a direction opposite to a direction indicated by the direction angle, to obtain the first modulation symbol.

In a possible implementation, that the second communication apparatus decrypts the encrypted first modulation symbol based on the first key, to obtain the first modulation symbol includes: The second communication apparatus subtracts a phase of a third modulation symbol from a phase of the encrypted first modulation symbol, to obtain the first modulation symbol, where the third modulation symbol is obtained by modulating the first key based on the constellation diagram.

According to an eighth aspect, an embodiment of this application provides a communication method. The method may be performed by a first communication apparatus. For an implementation of the first communication apparatus, refer to the content described in the first aspect. The method includes: modulating M bits based on a constellation diagram, to obtain a first modulation symbol; encrypting the first modulation symbol based on a first key, to obtain the encrypted first modulation symbol; and sending the encrypted first modulation symbol to a second communication apparatus, where the first key is generated based on first information, the first information includes a third key, and the third key is a key shared by the first communication apparatus and the second communication apparatus.

The first communication apparatus may further perform any possible implementation performed by the first communication apparatus in the seventh aspect. Details are not listed herein one by one.

According to a ninth aspect, an embodiment of this application provides a communication method. The method may be performed by a second communication apparatus. For an implementation of the second communication apparatus, refer to the content described in the second aspect. The method includes: receiving an encrypted first modulation symbol; and decrypting the encrypted first modulation symbol based on a first key, to obtain the first modulation symbol, where the first key is generated based on first information, the first information includes a third key, and the third key is a key shared by a first communication apparatus and the second communication apparatus.

The second communication apparatus may further perform any possible implementation performed by the second communication apparatus in the eighth aspect. Details are not listed herein one by one.

According to a tenth aspect, an embodiment of this application provides a communication apparatus. The communication apparatus may be the first communication apparatus in the first aspect and any possible implementation, or has a function of the first communication apparatus. The first communication apparatus includes a corresponding means (means) or module configured to perform the first aspect or any optional implementation. For example, the communication apparatus includes a processing module (sometimes also referred to as a processing unit) and a transceiver module (sometimes also referred to as a transceiver unit).

For example, the processing module is configured to modulate M bits based on a constellation diagram to obtain a first modulation symbol, and modulate N bits based on the constellation diagram to obtain a second modulation symbol, where both M and N are positive integers; and a sending module is configured to send the first modulation symbol and the second modulation symbol to a second communication apparatus, where a first bit sequence and a second bit sequence have different values at a first location, and a third bit sequence and a fourth bit sequence are the same; or a first bit sequence and a second bit sequence are the same, and a third bit sequence and a fourth bit sequence have different values at a second location; and the first bit sequence is a bit sequence corresponding to a real part of the first modulation symbol, the second bit sequence is a bit sequence corresponding to a real part of the second modulation symbol, the third bit sequence is a bit sequence corresponding to an imaginary part of the first modulation symbol, the fourth bit sequence is a bit sequence corresponding to an imaginary part of the second modulation symbol, the first location is a location of any bit in the first bit sequence or the second bit sequence, the second location is a location of any bit in the third bit sequence or the fourth bit sequence, and the first modulation symbol and the second modulation symbol are symmetrical along a horizontal axis or a vertical axis of the constellation diagram.

According to an eleventh aspect, an embodiment of this application provides a communication apparatus. The communication apparatus may be the second communication apparatus in the second aspect and any possible implementation, or has a function of the second communication apparatus. The second communication apparatus includes a corresponding means (means) or module configured to perform the second aspect or any optional implementation. For example, the communication apparatus includes a processing module (sometimes also referred to as a processing unit) and a transceiver module (sometimes also referred to as a transceiver unit).

For example, the transceiver module is configured to receive a first modulation symbol and a second modulation symbol from a first communication apparatus; and the processing module is configured to demodulate the first modulation symbol based on a constellation diagram to obtain M bits, and demodulate the second modulation symbol based on the constellation diagram to obtain N bits, where N and M are positive integers, where a first bit sequence and a second bit sequence have different values at a first location, and a third bit sequence and a fourth bit sequence are the same; or a first bit sequence and a second bit sequence are the same, and a third bit sequence and a fourth bit sequence have different values at a second location; and the first bit sequence is a bit sequence corresponding to a real part of the first modulation symbol, the second bit sequence is a bit sequence corresponding to a real part of the second modulation symbol, the third bit sequence is a bit sequence corresponding to an imaginary part of the first modulation symbol, the fourth bit sequence is a bit sequence corresponding to an imaginary part of the second modulation symbol, the first location is a location of any bit in the first bit sequence or the second bit sequence, the second location is a location of any bit in the third bit sequence or the fourth bit sequence, and the first modulation symbol and the second modulation symbol are symmetrical along a horizontal axis or a vertical axis of the constellation diagram.

According to a twelfth aspect, an embodiment of this application provides a communication apparatus. The communication apparatus may be the first communication apparatus in the fourth aspect and any possible implementation, or has a function of the first communication apparatus. The first communication apparatus includes a corresponding means (means) or module configured to perform the fourth aspect or any optional implementation. For example, the communication apparatus includes a processing module (sometimes also referred to as a processing unit) and a transceiver module (sometimes also referred to as a transceiver unit).

For example, the processing module is configured to modulate M bits based on a constellation diagram to obtain a first modulation symbol, where M is a positive integer; and the transceiver module is configured to send the first modulation symbol to a second communication apparatus. The constellation diagram satisfies: Two bit sequences corresponding to real parts of any two modulation symbols that are symmetrical along a horizontal axis are the same, and values of bits at an $i^{th}$ location in two bit sequences corresponding to imaginary parts are different; and/or values of bits at a $j^{th}$ location in two bit sequences corresponding to real parts of any two modulation symbols that are symmetrical along a vertical axis in the constellation diagram are different, and two bit sequences corresponding to imaginary parts are the same, where i and j are positive integers. Alternatively, values of bits at a $j^{th}$ location in two bit sequences corresponding to real parts of any two modulation symbols that are symmetrical along a horizontal axis are different, and two bit sequences corresponding to imaginary parts are the same; and/or two bit sequences corresponding to real parts of any two modulation symbols that are symmetrical along a vertical axis in the constellation diagram are the same, and values of bits at an $i^{th}$ location in two bit sequences corresponding to imaginary parts are different, where i and j are positive integers.

According to a thirteenth aspect, an embodiment of this application provides a communication apparatus. The communication apparatus may be the second communication apparatus in the fifth aspect and any possible implementation, or has a function of the second communication apparatus. The second communication apparatus includes a corresponding means (means) or module configured to perform the fifth aspect or any optional implementation. For example, the communication apparatus includes a processing module (sometimes also referred to as a processing unit) and a transceiver module (sometimes also referred to as a transceiver unit).

For example, the transceiver module is configured to receive a first modulation symbol from a first communication apparatus, and the processing module is configured to demodulate the first modulation symbol based on a constellation diagram, to obtain M bits, where M is a positive integer. The constellation diagram satisfies: Two bit sequences corresponding to real parts of any two modulation symbols that are symmetrical along a horizontal axis are the same, and values of bits at an $i^{th}$ location in two bit sequences corresponding to imaginary parts are different; and/or values of bits at a $j^{th}$ location in two bit sequences corresponding to real parts of any two modulation symbols that are symmetrical along a vertical axis in the constellation diagram are different, and two bit sequences corresponding to imaginary parts are the same, where i and j are positive integers. Alternatively, values of bits at a $j^{th}$ location in two bit sequences corresponding to real parts of any two modulation symbols that are symmetrical along a horizontal axis are different, and two bit sequences corresponding to imaginary parts are the same; and/or two bit sequences corresponding to real parts of any two modulation symbols that are symmetrical along a vertical axis in the constellation diagram are the same, and values of bits at an $i^{th}$ location in two bit sequences corresponding to imaginary parts are different, where i and j are positive integers.

According to a fourteenth aspect, an embodiment of this application provides a communication apparatus. The communication apparatus may be the first communication apparatus in the eighth aspect and any possible implementation, or has a function of the first communication apparatus. The first communication apparatus includes a corresponding means (means) or module configured to perform the eighth aspect or any optional implementation. For example, the communication apparatus includes a processing module (sometimes also referred to as a processing unit) and a transceiver module (sometimes also referred to as a transceiver unit).

For example, the processing module is configured to modulate M bits based on a constellation diagram, to obtain a first modulation symbol; and encrypt the first modulation symbol based on a first key, to obtain the encrypted first modulation symbol; and the transceiver module is configured to send the encrypted first modulation symbol to a second communication apparatus, where the first key is generated based on first information, the first information includes a third key, and the third key is a key shared by the first communication apparatus and the second communication apparatus.

According to a fifteenth aspect, an embodiment of this application provides a communication apparatus. The communication apparatus may be the second communication apparatus in the ninth aspect and any possible implementation, or has a function of the second communication apparatus. The second communication apparatus includes a corresponding means (means) or module configured to perform the ninth aspect or any optional implementation. For example, the communication apparatus includes a processing module (sometimes also referred to as a processing unit) and a transceiver module (sometimes also referred to as a transceiver unit).

For example, the transceiver module is configured to receive an encrypted first modulation symbol; and the processing module is configured to decrypt the encrypted first modulation symbol based on a first key, to obtain the first modulation symbol, where the first key is generated based on first information, the first information includes a third key, and the third key is a key shared by a first communication apparatus and the second communication apparatus.

According to a sixteenth aspect, an embodiment of this application provides a communication apparatus, including a processor and a communication interface. The communication interface is configured to receive a signal from an apparatus other than the communication apparatus and transmit the signal to the processor, or send a signal from the processor to an apparatus other than the communication apparatus. The processor executes code instructions by using a logic circuit to implement the communication method according to any one of the first aspect, the second aspect, the fourth aspect, the fifth aspect, the eighth aspect, the ninth aspect, and the possible implementations.

Optionally, the communication apparatus further includes other components, for example, an antenna, an input/output module, and an interface. Such components may be hardware, software, or a combination of software and hardware.

According to a seventeenth aspect, an embodiment of this application provides a chip system. The chip system includes a processor and an interface. The processor is configured to invoke instructions from the interface and run the instructions. When executing the instructions, the processor implements the communication method according to any one of the first aspect, the second aspect, the third aspect, the fourth aspect, or the possible implementations.

According to an eighteenth aspect, an embodiment of this application provides a computer-readable storage medium. The computer-readable storage medium is configured to store a computer program or instructions. When the computer program or the instructions are run, the communication method according to any one of the first aspect to the ninth aspect and the possible implementations is implemented.

According to a nineteenth aspect, an embodiment of this application provides a computer program product including instructions. When the computer program product runs on a computer, the communication method according to any one of the first aspect to the ninth aspect and the possible implementations is implemented.

For beneficial effects of the second aspect to the sixth aspect and the eighth aspect to the nineteenth aspect, refer to the beneficial effects described in the first aspect or the seventh aspect. Details are not described herein again.

BRIEF DESCRIPTION OF DRAWINGS

FIG. 1 is a diagram of a constellation diagram that conforms to a Gray code mapping rule;
FIG. 2 is a diagram of a scenario to which embodiments of this application are applicable;
FIG. 3 is a diagram of protocol stacks of a first communication apparatus and a second communication apparatus according to an embodiment of this application;
FIG. 4 is a diagram of a communication method according to an embodiment of this application;
FIG. 5 is a partial diagram of a constellation diagram according to an embodiment of this application;
FIG. 6 is a diagram of a constellation diagram according to an embodiment of this application;
FIG. 7 is a partial diagram of another constellation diagram according to an embodiment of this application;
FIG. 8 is a diagram of a process of encrypting a first modulation symbol according to an embodiment of this application;
FIG. 9 is a diagram of another communication method according to an embodiment of this application;
FIG. 10 is a diagram of a result of a simulation test according to an embodiment of this application;
FIG. 11 is a diagram of another communication method according to an embodiment of this application;
FIG. 12 is a diagram of a structure of a communication apparatus according to an embodiment of this application; and
FIG. 13 is a diagram of a structure of another communication apparatus according to an embodiment of this application.

DESCRIPTION OF EMBODIMENTS

To make objectives, technical solution, and advantages of embodiments of this application clearer, the following further describes embodiments of this application in detail with reference to the accompanying drawings.

For ease of understanding by a person skilled in the art, the following describes terms in embodiments of this application.

(1) A terminal device is a device having wireless sending and receiving functions, and may be a fixed device, a mobile device, a handheld device, a wearable device, a vehicle-mounted device, or a wireless apparatus (for example, a communication module or a chip system) built in the foregoing device. The terminal device is configured to connect a person, an object, a machine, and the like, and may be widely used in various scenarios, for example, including but not limited to the following scenarios: cellular communication, device-to-device (device-to-device, D2D) communication, vehicle-to-everything (vehicle-to-everything, V2X), machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like.

2. A network device includes, for example, an access network apparatus (or referred to as an access network device or an access network element) and/or a core network apparatus (or referred to as a core network device or a core network element).

The access network apparatus is a device having wireless sending and receiving functions, and is configured to communicate with the terminal device. The access network apparatus includes but is not limited to a base station (BTS, NodeB, eNodeB/eNB, or gNodeB/gNB) in the foregoing communication system, a transmission reception point (t(R)ANsmission reception point, TRP), a base station subsequently evolved in 3GPP, an access node in a wireless fidelity (wireless fidelity, Wi-Fi) system, a wireless relay node, a wireless backhaul node, a satellite, an uncrewed aerial vehicle, or the like. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. Alternatively, the access network element may be a radio controller, a central unit (central unit, CU) in a cloud radio access network (cloud radio access network, C(R)AN) scenario, and may also be referred to as a convergence unit, and/or a distributed unit (distributed unit, DU). Alternatively, the access network apparatus may be a server, a wearable device, a vehicle-mounted device, or the like. For example, an access network element in a vehicle-to-everything (vehicle-to-everything, V2X) technology may be a roadside unit (roadside unit, RSU). An example in which the access network apparatus is a base station is used below for description. A plurality of access network apparatuses in a communication system may be base stations of a same type, or may be base stations of different types. The base station may communicate with the terminal device, or may communicate with the terminal device via a relay station. The terminal device may communicate with a plurality of base stations in different access technologies.

The access network apparatus is configured to implement at least one of functions such as mobility management, data processing, session management, and policy and charging. Names of devices that implement a core network function in systems of different access technologies may be different. This is not limited in embodiments of this application. Using a 5G system as an example, the access network apparatus includes an AMF, a session management function (session management function, SMF), a user plane function (user plane function, UPF), or the like.

3. An apparatus may be a single device, a software module or a hardware module (such as a chip) in a single device, an apparatus integrating a plurality of devices, or the like.

4. A Gray code is proposed by Frank Gray of Bell Labs in 1940, and is used to prevent an error when a signal is transmitted by using a PCM (pulse code modulation) method. The Gray code is a sequence set, only one bit changes between two adjacent numbers, and a sequence of the Gray code is not unique.

5. A constellation diagram that conforms to a Gray code mapping rule is a constellation diagram generated by using a Gray code design rule. In this constellation diagram, a Hamming distance between two adjacent modulation symbols is 1. In other words, in bit sequences corresponding to two adjacent modulation symbols, values of bits at only one location are different, and values of bits at another location are the same. For example, a bit sequence corresponding to one modulation symbol is 1111, and a bit sequence corresponding to the other modulation symbol is 1110. Values of bits at only a fourth location are different in the one modulation symbol and the another modulation symbol.

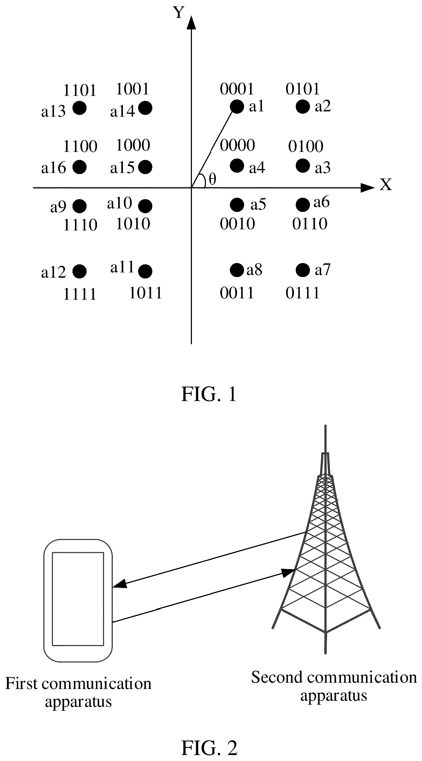

The following describes, with reference to a constellation diagram that conforms to a Gray code mapping rule shown in FIG. 1, the constellation diagram that conforms to the Gray code mapping rule. A modulation scheme corresponding to the constellation diagram is a 16 quadrature amplitude modulation (quadrature amplitude modulation, 16QAM/16-QAM) scheme. In this case, the constellation diagram may be referred to as a 16QAM constellation diagram.

As shown in FIG. 1, the constellation diagram includes an X axis (which may also be referred to as a horizontal axis) and a Y axis (which may also be referred to as a vertical axis). The constellation diagram may also include 16 modulation symbols, and the 16 modulation symbols include 16 modulation symbols shown by a1 to a16 in FIG. 1. Each modulation symbol corresponds to one bit sequence, and one bit sequence includes four bits. As shown in FIG. 1, bit sequences sequentially corresponding to the 16 modulation symbols a1 to a16 are 0001, 0101, 0100, 0000, 0010, 0110, 0111, 0011, 1110, 1010, 1011, 1111, 1101, 1001, 1000, and 1100.

As shown in FIG. 1, two bit sequences corresponding to any two adjacent modulation symbols have different bits at only one location. For example, values of bits at only a fourth location in constellation points a1 and a4 are different. For example, values of bits at only a second location in constellation points a4 and a3 are different.

The following describes a communication process between a transmitter and a receiver by using an example in which a sent bit sequence is 0001 and a constellation diagram is the constellation diagram shown in FIG. 1.

The transmitter may modulate the bit sequence by using the constellation diagram shown in FIG. 1, to obtain a modulation symbol (that is, the modulation symbol shown by a1 in FIG. 1), and send the modulation symbol to the receiver. The receiver demodulates the modulation symbol. Even if the receiver incorrectly demodulates the modulation symbol, the receiver may demodulate the modulation symbol into 0000 or 0101. A bit sequence obtained by the receiver through demodulation is different from a correct bit sequence in bits at only one location, that is, a bit error rate of the receiver is relatively low. In a process in which the transmitter sends the modulation symbol to the receiver, an eavesdropper may eavesdrop on the modulation symbol sent by the transmitter. In this case, the eavesdropper may also demodulate the modulation symbol and obtain a bit sequence close to the bit sequence sent by the transmitter, causing low communication security.

In view of this, embodiments of this application provide a communication method. In the method, two bit sequences corresponding to real parts of a first modulation symbol and a second modulation symbol that are corresponding along a horizontal axis or a vertical axis are the same, and values of bits at a second location in two bit sequences corresponding to imaginary parts are different; and/or values of bits at a first location in two bit sequences corresponding to real parts are different, and two bit sequences corresponding to imaginary parts are the same. That is, a constellation diagram is designed by using a non-Gray code. Because a Hamming distance between adjacent modulation symbols in the constellation diagram is not limited in the method, bit sequences corresponding to two adjacent modulation symbols in the constellation diagram are distributed randomly. In this way, difficulty for an eavesdropper to demodulate the modulation symbol is increased, helping improve security of communication using the constellation diagram.

The method provided in embodiments of this application may be applied to a 5th generation (fifth generation, 5G) mobile communication system, for example, a new radio (new radio, NR) system, or may be applied to a future evolved mobile communication system or another similar communication system. Specifically, for example, the method may be applied to an air interface communication system or a sidelink (sidelink) communication system. The sidelink communication system is, for example, a vehicle-to-X (vehicle-to-X, V2X) communication system or a device-to-device (device-to-device, D2D) communication system. This is not specifically limited in embodiments of this application.

FIG. 2 is a diagram of a scenario to which embodiments of this application are applicable, or may be considered as a diagram of a structure of a communication system. As shown in FIG. 2, the scenario includes a first communication apparatus and a second communication apparatus that communicate with each other.

The first communication apparatus may send a signal to the second communication apparatus (which is shown by using an arrow toward the second communication apparatus in FIG. 2). In this case, the first communication apparatus may be considered as a transmitter or a transmitting device, and the second communication apparatus may be considered as a receiver or a receiving device. Certainly, the second communication apparatus may also send a signal to the first communication apparatus (which is shown by using an arrow toward the first communication apparatus in FIG. 2). In this case, the second communication apparatus may be considered as a transmitter or a transmitting device, and the first communication apparatus may be considered as a receiver or a receiving device.

For example, the first communication apparatus is a terminal device, or a software module or a hardware module (for example, a chip, and specifically, a baseband chip) in the terminal device, and the second communication apparatus is a network device, or a software module or a hardware module (for example, a chip, and specifically, a baseband chip) in the network device. Alternatively, for example, the first communication apparatus is a network device, or a software module or a hardware module (for example, a chip, and specifically, a baseband chip) in the network device, and the second communication apparatus is a terminal device, or a software module or a hardware module (for example, a chip, and specifically, a baseband chip) in the terminal device. For implementation forms of the network device and the terminal device, refer to the foregoing descriptions. Alternatively, for example, the first communication apparatus is a terminal device, or a software module or a hardware module (for example, a chip, and specifically, a baseband chip) in the terminal device, and the second communication apparatus is a terminal device, or a software module or a hardware module (for example, a chip, and specifically, a baseband chip) in the terminal device. Specific implementation forms of the first communication apparatus and the second communication apparatus are not limited in embodiments of this application. For implementation forms of the network device and the terminal device, refer to the foregoing descriptions.

In FIG. 2, an example in which a quantity of first communication apparatuses and a quantity of second communication apparatuses are both 1 is used. However, the quantity of first communication apparatuses and the quantity of second communication apparatuses are not limited actually.

In addition, in embodiments of this application, unless otherwise specified, a quantity of nouns represents "a singular noun or a plural noun", that is, "one or more". "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects. For example, A/B indicates A or B. "At least one of the following items (pieces)" or a similar expression thereof means any combination of these items, including a single item (piece) or any combination of a plurality of items (pieces). For example, at least one of a, b, or c indicates a, b, c, a and b, a and c, b and c, or a, b, and c, where a, b, and c may be singular or plural.

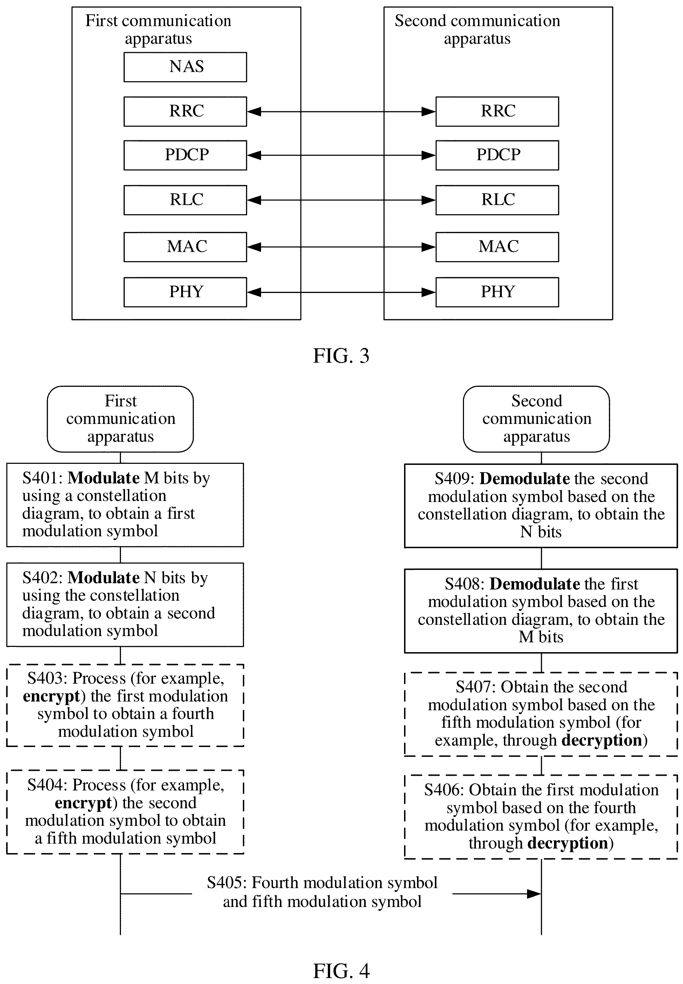

FIG. 3 is a diagram of protocol stacks of a first communication apparatus and a second communication apparatus according to an embodiment of this application. As shown in FIG. 3, the protocol stacks of the first communication apparatus and the second communication apparatus each include a radio resource control (radio resource control, RRC) layer (layer), a packet data convergence protocol (packet data convergence protocol, PDCP) layer, a radio resource control (radio link control, RLC) layer, a medium access control (medium access control, MAC) layer, and a physical (physical, PHY) layer. In addition, the first communication apparatus further includes a non-access stratum (non-access stratum, NAS).

The protocol stacks of the first communication apparatus and the second communication apparatus may adapt to each other. For example, the RRC layer of the first communication apparatus adapts (or corresponds) to the RRC layer of the second communication apparatus, the PDCP layer of the first communication apparatus adapts to the PDCP layer of the second communication apparatus, the RLC layer of the first communication apparatus adapts to the RLC layer of the second communication apparatus, the MAC layer of the first communication apparatus adapts to the MAC layer of the second communication apparatus, and the PHY layer of the first communication apparatus adapts to the PHY layer of the second communication apparatus.

The following describes the method provided in embodiments of this application with reference to the accompanying drawings. In the accompanying drawings corresponding to embodiments of this application, all steps represented by dashed lines are optional steps. A first communication apparatus in embodiments of this application is, for example, the first communication apparatus in FIG. 2, and a second communication apparatus is, for example, the second communication apparatus in FIG. 2. For protocol stacks of the first communication apparatus and the second communication apparatus, refer to the foregoing diagram of the protocol stacks in FIG. 3. In embodiments of this application, an example in which the first communication apparatus serves as a transmitter and the second communication apparatus serves as a receiver is used for description.

FIG. 4 is a diagram of a communication method according to an embodiment of this application.

S401: A first communication apparatus modulates M bits by using a constellation diagram, to obtain a first modulation symbol. M is a positive integer.

The M bits may be bits to be sent by the first communication apparatus, and the M bits may be considered as a bit sequence, a bitstream, or a part of bits in a bitstream. For example, the first communication apparatus may group bits in the bitstream to obtain at least one group of bits. Each group of bits in the at least one group of bits includes M bits. In this case, the M bits in S401 may be one group of bits in the at least one group of bits.

Optionally, before the first communication apparatus performs S401, the first communication apparatus may perform channel coding on a first original bit sequence. The first original bit sequence refers to bits that are to be sent and belong to a service flow. For example, channel coding is to add a check bit sequence. For example, the first communication apparatus may determine a first check bit sequence corresponding to the first original bit sequence, and the first communication apparatus uses the first original bit sequence and the first check bit sequence as the M bits. The first original bit sequence indicates service data corresponding to the service flow, and the first check bit sequence is used to check the original bit sequence. A quantity of bits of the first check bit sequence may be specified in a protocol, or may be determined by the first communication apparatus and a second communication apparatus through negotiation.

The constellation diagram may include a plurality of modulation symbols, and any modulation symbol in the constellation diagram corresponds to one bit sequence. The bit sequence includes, for example, m bits, where m is a positive integer, and m may be equal to M. A modulation order corresponding to the constellation diagram may be $2^m$. Optionally, a quantity of modulation symbols in the constellation diagram is $Y=2^m$. Any modulation symbol in the constellation diagram may be a complex number, that is, any modulation symbol may include a real part and an imaginary part. The real part of any modulation symbol may correspond to a part of bits in m bits corresponding to the modulation symbol. For example, the part of bits in the m bits is m/2 bits in the m bits. The imaginary part of any modulation symbol may correspond to the other part of bits in the m bits corresponding to the modulation symbol. For example, the other part of bits in the m bits is 2/m bits in the m bits.

The constellation diagram may be a constellation diagram corresponding to any modulation scheme, and the modulation scheme is, for example, a pulse amplitude modulation (pulse amplitude modulation, PAM) modulation scheme, a QAM modulation scheme, or a phase shift keying (phase shift keying, PSK) modulation scheme. PSK may include pulse phase shift keying (pulse PSK, QPSK). A constellation diagram corresponding to the QAM scheme (which may also be referred to as a QAM constellation diagram) is used as an example, and different modulation orders correspond to different constellation diagrams. Different constellation diagrams may mean that different constellation diagrams include different quantities of constellation points. For example, the QAM constellation diagram may be classified into 16QAM, 64QAM, or the like.

In a possible implementation, the constellation diagram may satisfy any one of the following first conditions in A1 to A6. Any first condition in A1 to A6 may be considered as a non-Gray code mapping rule.

A1. Two bit sequences corresponding to real parts of any two modulation symbols that are symmetrical along a horizontal axis in the constellation diagram are the same, and values of bits at an $i^{th}$ location in two bit sequences corresponding to imaginary parts of any two modulation symbols that are symmetrical along the horizontal axis in the constellation diagram are different. In the constellation diagram, two bit sequences corresponding to real parts of any two modulation symbols have a same total quantity of bits, and two bit sequences corresponding to imaginary parts have a same total quantity of bits.

The horizontal axis may be, for example, an X axis, an I axis, or a real-part axis, and the horizontal axis may represent an in-phase component or a real part. Two modulation symbols that are symmetrical along the horizontal axis may also be described as two modulation symbols that are corresponding along the horizontal axis. A vertical axis may be, for example, a Y axis, a Q axis, or an imaginary-part axis. The vertical axis may represent a quadrature component or an imaginary part. Two modulation symbols that are symmetrical along the vertical axis may also be described as two modulation symbols that are corresponding along the vertical axis.

For brevity of description, two bit sequences corresponding to real parts of two modulation symbols that are symmetrical along the horizontal axis are referred to as a first group of bit sequences for short below, and two bit sequences corresponding to imaginary parts of any two modulation symbols that are symmetrical along the horizontal axis are referred to as a second group of bit sequences for short below.

That two bit sequences corresponding to real parts of any two modulation symbols that are symmetrical along the horizontal axis are the same may be understood as that values of bits at a $j^{th}$ location in the first group of bit sequences are the same, where j may be any positive integer from 1 to k. k may be a total quantity of bits (or a quantity of bits) of any bit sequence in the first group of bit sequences.

Values of bits at an $i^{th}$ location in the second group of bit sequences are different, i may be any positive integer from 1 to r, and r is a total quantity of bits of a bit sequence in the second group of bit sequences. Values of r and k are the same or different, and a sum of k and r is equal to m. For example, values of both k and r may be m/2.

In the first condition shown in A1, two bit sequences (referred to as a third group of bit sequences for short below) corresponding to real parts of two modulation symbols that are symmetrical along the vertical axis in the constellation diagram are the same, and values of bits at an $i^{th}$ location in two bit sequences (referred to as a fourth group of bit sequences for short below) corresponding to imaginary parts of two modulation symbols that are symmetrical along the vertical axis in the constellation diagram are different. Alternatively, values at a $j^{th}$ location in the third group of bit sequences may be different, and the fourth group of bit sequences are the same. In this embodiment of this application, a condition satisfied by two modulation symbols that are symmetrical along the vertical axis in the constellation diagram under the first condition shown in A1 is not specifically limited. For content of j and i, refer to the foregoing descriptions.

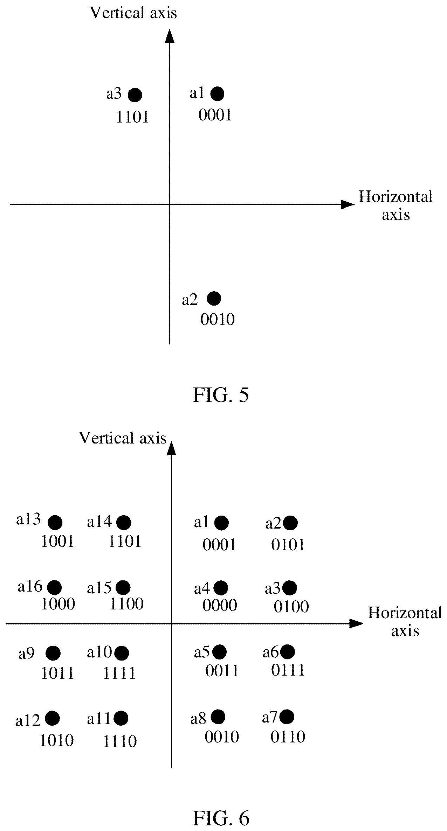

For example, FIG. 5 is a partial diagram of a constellation diagram according to an embodiment of this application. In FIG. 5, each modulation symbol corresponds to four bits, first two bits of each modulation symbol correspond to a real part, and last two bits of each modulation symbol correspond to an imaginary part. The constellation diagram in FIG. 5 includes modulation symbols a1 and a2. As shown in FIG. 5, the modulation symbol a1 is symmetrical (or corresponding) to the modulation symbol a2 along the horizontal axis.

As shown in FIG. 5, a bit sequence (that is, 00) corresponding to a real part of the modulation symbol a1 is the same as a bit sequence (that is, 00) corresponding to a real part of the modulation symbol a2, and a bit sequence (that is, 01) corresponding to an imaginary part of the modulation symbol a1 and a bit sequence (that is, 10) corresponding to an imaginary part of the modulation symbol a2 have different values of bits at a first location, and have different values of bits at a second location.

A2. Values of bits at a $j^{th}$ location in two bit sequences (that is, a third group of bit sequences) corresponding to real parts of any two modulation symbols that are symmetrical along a vertical axis in the constellation diagram are different, and two bit sequences (that is, a fourth group of bit sequences) corresponding to imaginary parts of any two modulation symbols that are symmetrical along the vertical axis in the constellation diagram are the same.

For content of any two modulation symbols that are symmetrical along the vertical axis in the constellation diagram, two bit sequences corresponding to real parts, and two bit sequences corresponding to imaginary parts, refer to the foregoing content.

Under the first condition shown in A2, bit sequences (that is, a first group of bit sequences) corresponding to real parts of two modulation symbols that are symmetrical along the horizontal axis in the constellation diagram are the same. Alternatively, bit sequences (that is, a second group of bit sequences) corresponding to imaginary parts of two modulation symbols that are symmetrical along the horizontal axis in the constellation diagram have different values at an $i^{th}$ location. Alternatively, values at a $j^{th}$ location in the first group of bit sequences are different, and the second group of bit sequences are the same. In this embodiment of this application, a condition satisfied by two modulation symbols that are symmetrical along the horizontal axis in the constellation diagram under the first condition shown in A2 is not specifically limited.

For example, still refer to FIG. 5. The constellation diagram further includes a modulation symbol a3. The modulation symbol a1 is symmetrical to the modulation symbol a3 along the vertical axis.

As shown in FIG. 5, a bit sequence (that is, 00) corresponding to a real part of the modulation symbol a1 and a bit sequence (that is, 11) corresponding to a real part of the modulation symbol a3 have different bits at a first location, and have different bits at a second location, and a bit sequence (that is, 01) corresponding to an imaginary part of the modulation symbol a1 is the same as a bit sequence (that is, 01) corresponding to an imaginary part of the modulation symbol a3.

A3. Two bit sequences (that is, a first group of bit sequences) corresponding to real parts of any two modulation symbols that are symmetrical along the horizontal axis in the constellation diagram are the same, values of bits at a corresponding location in two bit sequences (that is, a second group of bit sequences) corresponding to imaginary parts of any two modulation symbols that are symmetrical along the horizontal axis in the constellation diagram are different, values of bits at a corresponding location in two bit sequences (that is, a third group of bit sequences) corresponding to real parts of any two modulation symbols that are symmetrical along the vertical axis in the constellation diagram are different, and values of bits at a corresponding location in two bit sequences (that is, a fourth group of bit sequences) corresponding to imaginary parts of any two modulation symbols that are symmetrical along the vertical axis in the constellation diagram are the same.

For meanings of any two modulation symbols that are symmetrical along the horizontal axis, two modulation symbols that are symmetrical along the vertical axis, and a corresponding location in any two bit sequences, refer to the foregoing content.

For example, FIG. 6 is a diagram of a constellation diagram according to an embodiment of this application. As shown in FIG. 6, the constellation diagram includes 16 modulation symbols shown by a1 to a16, each modulation symbol corresponds to four bits, first two bits of each modulation symbol correspond to a real part, and last two bits of each modulation symbol correspond to an imaginary part. As shown in FIG. 6, the modulation symbol a1 is symmetrical to the modulation symbol a8 along the horizontal axis, and the modulation symbol a1 is symmetrical to the modulation symbol a14 along the vertical axis. The modulation symbol a2 is symmetrical to the modulation symbol a7 along the horizontal axis, and the modulation symbol a2 is symmetrical to the modulation symbol a13 along the vertical axis. The modulation symbol a3 is symmetrical to the modulation symbol a6 along the horizontal axis, and the modulation symbol a3 is symmetrical to the modulation symbol a16 along the vertical axis. The modulation symbol a4 is symmetrical to the modulation symbol a5 along the horizontal axis, and the modulation symbol a4 is symmetrical to the modulation symbol a15 along the vertical axis. The modulation symbol a5 is symmetrical to the modulation symbol a10 along the vertical axis. The modulation symbol a6 is symmetrical to the modulation symbol a9 along the vertical axis. The modulation symbol a7 is symmetrical to the modulation symbol a12 along the vertical axis. The modulation symbol a8 is symmetrical to the modulation symbol a11 along the vertical axis. The modulation symbol a9 is symmetrical to the modulation symbol a16 along the horizontal axis. The modulation symbol a10 is symmetrical to the modulation symbol a15 along the horizontal axis. The modulation symbol a11 is symmetrical to the modulation symbol a14 along the horizontal axis. The modulation symbol a12 is symmetrical to the modulation symbol a13 along the horizontal axis.

A bit sequence (that is, 00) corresponding to a real part of the modulation symbol a1 is the same as a bit sequence (that is, 00) corresponding to a real part of the modulation symbol a8, and a bit sequence (that is, 01) corresponding to an imaginary part of the modulation symbol a1 and a bit sequence (that is, 10) corresponding to an imaginary part of the modulation symbol a8 have different bits at a first location, and have different bits at a second location. A bit sequence (that is, 00) corresponding to a real part of the modulation symbol a1 and a bit sequence (that is, 11) corresponding to a real part of the modulation symbol a14 have different bits at a first location, and have different bits at a second location, and a bit sequence (that is, 01) corresponding to an imaginary part of the modulation symbol a1 is the same as a bit sequence (that is, 01) corresponding to an imaginary part of the modulation symbol a14. Other two modulation symbols that are symmetrical along the horizontal axis and two modulation symbols that are corresponding along the vertical axis all satisfy the first condition shown in A3, and details are not described herein.

A4. Values of bits at a $j^{th}$ location in two bit sequences corresponding to real parts of any two modulation symbols that are symmetrical along a horizontal axis in the constellation diagram are different, and two bit sequences corresponding to imaginary parts of any two modulation symbols that are symmetrical along the horizontal axis in the constellation diagram are the same.

In the first condition shown in A4, two bit sequences corresponding to real parts of any two modulation symbols that are symmetrical along the vertical axis in the constellation diagram are the same, and values of bits at an $i^{th}$ location in two bit sequences corresponding to real parts of any two modulation symbols that are symmetrical along the vertical axis in the constellation diagram are different. Alternatively, values of bits at a $j^{th}$ location in two bit sequences corresponding to real parts of any two modulation symbols that are symmetrical along the vertical axis in the constellation diagram are the same, and two bit sequences corresponding to real parts of any two modulation symbols that are symmetrical along the vertical axis in the constellation diagram are the same. In this embodiment of this application, a condition satisfied by two modulation symbols that are symmetrical along the vertical axis in the constellation diagram under the first condition shown in A4 is not specifically limited.

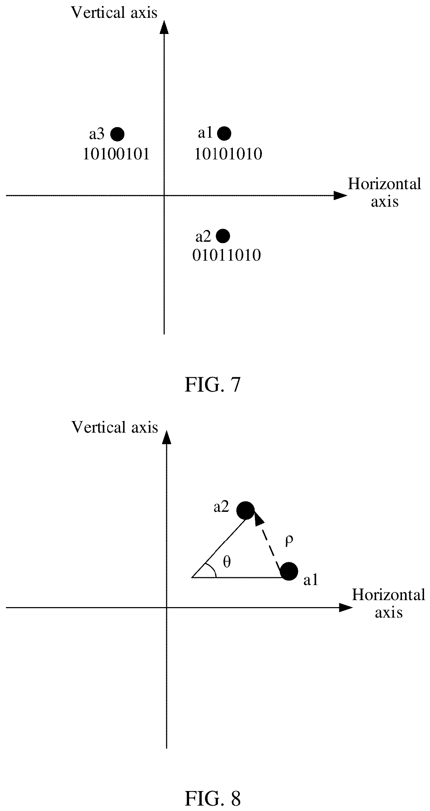

For example, FIG. 7 is a partial diagram of a constellation diagram according to an embodiment of this application. In FIG. 7, each modulation symbol corresponds to eight bits, first four bits of each modulation symbol correspond to a real part, and last four bits of each modulation symbol correspond to an imaginary part. As shown in FIG. 7, a1 and a2 are two modulation symbols that are corresponding along the horizontal axis. A bit sequence (that is, 1010) corresponding to a real part of the modulation symbol a1 and a bit sequence (that is, 0101) corresponding to a real part of the modulation symbol a2 have different values of bits at a first location, have different values of bits at a second location, have different values of bits at a third location, and have different values of bits at a fourth location. A bit sequence (that is, 1010) corresponding to an imaginary part of the modulation symbol a1 is the same as a bit sequence (that is, 1010) corresponding to an imaginary part of the modulation symbol a2.

A5. Two bit sequences (that is, a third group of bit sequences) corresponding to real parts of any two modulation symbols that are symmetrical along the vertical axis in the constellation diagram are the same, and bits at an $i^{th}$ location in two bit sequences (that is, a fourth group of bit sequences) corresponding to imaginary parts of any two modulation symbols that are symmetrical along the vertical axis in the constellation diagram are different.

For example, still refer to FIG. 7. FIG. 7 further includes a modulation symbol a3, and the modulation symbol a3 and the modulation symbol a1 are symmetrical along the vertical axis. A bit sequence (that is, 1010) corresponding to a real part of the modulation symbol a3 is the same as a real part (that is, 1010) of the modulation symbol a1, and a bit sequence (that is, 0101) corresponding to an imaginary part of the modulation symbol a3 and a bit sequence (that is, 1010) corresponding to an imaginary part of the modulation symbol a1 have different values of bits at a first location, have different values of bits at a second location, have different values of bits at a third location, and have different values of bits at a fourth location.

In the first condition shown in A5, two bit sequences corresponding to real parts of any two modulation symbols that are symmetrical along the horizontal axis in the constellation diagram are the same, and values of bits at an $i^{th}$ location in two bit sequences corresponding to real parts of any two modulation symbols that are symmetrical along the horizontal axis in the constellation diagram are different. Alternatively, values of bits at a $j^{th}$ location in two bit sequences corresponding to real parts of any two modulation symbols that are symmetrical along the horizontal axis in the constellation diagram are the same, and two bit sequences corresponding to real parts of any two modulation symbols that are symmetrical along the horizontal axis in the constellation diagram are the same. In this embodiment of this application, a condition satisfied by two modulation symbols that are symmetrical along the horizontal axis in the constellation diagram under the first condition shown in A5 is not specifically limited.

A6. Values of bits at a $j^{th}$ location in two bit sequences corresponding to real parts of any two modulation symbols that are symmetrical along the horizontal axis in the constellation diagram are different, two bit sequences corresponding to imaginary parts of any two modulation symbols that are symmetrical along the horizontal axis in the constellation diagram are the same, two bit sequences (that is, a third group of bit sequences) corresponding to real parts of any two modulation symbols that are symmetrical along the vertical axis in the constellation diagram are the same, and bits at an $i^{th}$ location in two bit sequences (that is, a fourth group of bit sequences) corresponding to imaginary parts of any two modulation symbols that are symmetrical along the vertical axis in the constellation diagram are different.

The constellation diagram may be determined by the first communication apparatus and the second communication apparatus through negotiation, or may be configured in the first communication apparatus by using a protocol, or may be received by the first communication apparatus from the second communication apparatus. This is not limited in this embodiment of this application. After determining the M to-be-sent bits, the first communication apparatus may modulate (or map) the M bits by using the constellation diagram, to obtain the first modulation symbol. The first modulation symbol may be considered as a modulation symbol corresponding to the M bits in the constellation diagram. In other words, the first modulation symbol may correspond to the M bits.

For example, the M bits are 0001, and the constellation diagram is the constellation diagram shown in FIG. 6. The first communication apparatus may determine that the first modulation symbol is the modulation symbol shown by a1. For example, a real part of the modulation symbol shown by a1 is $\frac{\sqrt{2}}{2}$, and an imaginary part is $\frac{\sqrt{2}}{2}$. In this case, the first modulation symbol may be represented as $(\frac{\sqrt{2}}{2}+\frac{\sqrt{2}}{2}j)$.

In another possible solution (for example, corresponding to any embodiment of the fourth aspect to the sixth aspect in the foregoing summary), in this case, that the constellation diagram satisfies any one of the first conditions in A1 to A6 is not optional, that is, the constellation diagram needs to satisfy any one of the first conditions in A1 to A6.

S402: The first communication apparatus modulates N bits by using the constellation diagram, to obtain a second modulation symbol. N is a positive integer.

In addition to modulating the M bits, the first communication apparatus may further modulate the N bits by using the constellation diagram, to obtain the second modulation symbol. For a manner of modulating the N bits, refer to the foregoing content of modulating the M bits. Details are not described herein again. N is a positive integer, and N may be equal to M. The N bits may be considered as a bit sequence, a bitstream, or a part of bits in a bitstream. Optionally, the N bits and the M bits may be parts of bits belonging to a same bitstream, or belong to different bitstreams. Optionally, the first communication apparatus may perform channel coding on a second original bit sequence to obtain the N bits. In this case, the N bits include the second original bit sequence and a second check bit sequence used to check the second original bit sequence. The following describes a relationship between the first modulation symbol and the second modulation symbol.

Case 1: The first modulation symbol and the second modulation symbol are symmetrical along the horizontal axis in the constellation diagram.

In case 1, a bit sequence (referred to as a first bit sequence below) corresponding to a real part of the first modulation symbol and a bit sequence (referred to as a second bit sequence below) corresponding to a real part of the second modulation symbol have different values at a first location, and a bit sequence (referred to as a third bit sequence below) corresponding to an imaginary part of the first modulation symbol is the same as a bit sequence (referred to as a fourth bit sequence below) corresponding to an imaginary part of the second modulation symbol.

Alternatively, the first bit sequence is the same as the second bit sequence, and values at a second location in the third bit sequence and the fourth bit sequence are different. The first location is a location of any bit in the first bit sequence or the second bit sequence. The second location is a location of any bit in the third bit sequence or the fourth bit sequence.

Case 2: The first modulation symbol and the second modulation symbol are symmetrical along the vertical axis in the constellation diagram.

In case 2, values at a first location in the first bit sequence and the second bit sequence are different, and the third bit sequence and the fourth bit sequence are the same. Alternatively, the first bit sequence is the same as the second bit sequence, and values at a second location in the third bit sequence and the fourth bit sequence are different.

When the constellation diagram satisfies any one of the first conditions in A1 to A6, if the constellation diagram satisfies different first conditions, and relationships between the first modulation symbol and the second modulation symbol are different, relationships between bit sequences corresponding to the first modulation symbol and the second modulation symbol may also be different. The following uses examples for description.

B1. If the constellation diagram satisfies the first condition shown in A1, and the first modulation symbol and the second modulation symbol are symmetrical along the horizontal axis, the first bit sequence and the second bit sequence are the same, and values of bits at a second location in the third bit sequence and the fourth bit sequence are different.

B2. If the constellation diagram satisfies the first condition shown in A2, and the first modulation symbol and the second modulation symbol are symmetrical along the vertical axis, values of bits at a first location in the first bit sequence and the second bit sequence are different, and the third bit sequence and the fourth bit sequence are the same.

B3. If the constellation diagram satisfies the first condition shown in A4, and the first modulation symbol and the second modulation symbol are symmetrical along the horizontal axis, values of bits at a first location in the first bit sequence and the second bit sequence are different, and the third bit sequence and the fourth bit sequence are the same.

B4. If the constellation diagram satisfies the first condition shown in A5, and the first modulation symbol and the second modulation symbol are symmetrical along the vertical axis, the first bit sequence and the second bit sequence are the same, and values of bits at a second location in the third bit sequence and the fourth bit sequence are different.

In the cases of B1 to B4, the first modulation symbol and the second modulation symbol may be considered as an example in which the constellation diagram satisfies the first condition.

The first communication apparatus may perform steps S401 and S402 in any sequence. For example, S401 is performed before S402, or S402 is performed before S401, or S401 and S402 are performed simultaneously. This is not limited in this embodiment of this application.

S403: The first communication apparatus processes the first modulation symbol to obtain a fourth modulation symbol. The first communication apparatus obtains the fourth modulation symbol in a plurality of manners, and the following uses examples for description.

C1: Encrypt the first modulation symbol based on a first key, to obtain an encrypted modulation symbol. In this case, the fourth modulation symbol is the encrypted first modulation symbol.

The first key may be a key preconfigured or predefined in the first communication apparatus, for example, may be predefined in the first communication apparatus by using a protocol. Alternatively, the first key may be generated by the first communication apparatus based on first information.

The first information may include a third key. The third key may be a preconfigured or predefined key. Alternatively, the third key may be generated by the first communication apparatus based on the fourth key.

For example, the third key may be obtained by the first communication apparatus by encrypting the fourth key based on a third encryption algorithm. The fourth key may have any quantity of bits (or quantity of bits). For example, the quantity of bits of the fourth key is 512. The third encryption algorithm is, for example, a secure hash algorithm (secure hash algorithm, SHA), and the SHA algorithm is, for example, an SHA2-512 algorithm.

The fourth key may be preconfigured or predefined in the first communication apparatus. For example, the fourth key may be preconfigured or predefined at a non-physical layer of the first communication apparatus. The non-physical layer includes, for example, a non-access stratum, a radio resource control layer, a packet data convergence protocol layer, a radio link control layer, or a medium access control layer. Alternatively, the fourth key may be received by the first communication apparatus from a core network element, and the core network element is, for example, an AMF.

Optionally, in addition to the third key, the first information may further include information that has been sent by the first communication apparatus to the second communication apparatus and/or information that has been received by the first communication apparatus from the second communication apparatus. Because the information that has been sent by the first communication apparatus to the second communication apparatus and the information that has been received by the first communication apparatus from the second communication apparatus are usually cached at the physical layer of the first communication apparatus, the information that has been sent by the first communication apparatus to the second communication apparatus and the information that has been received by the first communication apparatus from the second communication apparatus may be considered as a physical layer parameter $\rho_{phy}$.

For example, the information that has been sent by the first communication apparatus to the second communication apparatus may be one or more of a service flow, a reference signal (reference signal, RS), and a random number. The reference signal is, for example, a sounding reference signal (sounding reference signal, SRS), a demodulation reference signal (demodulation reference signal, DMRS), or a channel state information reference signal (channel state information reference signal). The information that has been received by the first communication apparatus from the second communication apparatus may be, for example, one or more of service data, a reference signal, and a random number. When the first information further includes a service flow, because the service flow may be stored at the physical layer by frames, the service flow in the first information may also be referred to as physical layer subframe information.

Optionally, when the first communication apparatus is a terminal device, and the second communication apparatus is a network device, the fourth key is, for example, used to generate a third key for performing authentication on the first communication apparatus in a process in which the first communication apparatus accesses (or registers with) the second communication apparatus or a core network. In this case, the third key may be, for example, represented as $K_{gNB}$. For example, the authentication includes verifying an identity of the first communication apparatus. In this case, the first communication apparatus may be preconfigured or predefined with the fourth key, and the second communication apparatus may receive the fourth key from a core network apparatus (for example, an AMF).

Alternatively, when the first communication apparatus is a network device, and the second communication apparatus is a terminal device, the fourth key is, for example, used to generate a third key for performing authentication on the second communication apparatus in a process in which the second communication apparatus accesses (or registers with) the first communication apparatus or a core network. In this case, the first communication apparatus may be preconfigured or predefined with the fourth key, and the second communication apparatus receives the fourth key from a core network apparatus (for example, an AMF).

The following describes an example of a process in which the first communication apparatus generates the first key based on the first information.

Manner 1: The first communication apparatus encrypts the first information based on a fourth encryption algorithm, to obtain the first key. For example, the fourth encryption algorithm may also be an SHA algorithm, and the fourth encryption algorithm is the same as or different from the third encryption algorithm. The fourth encryption algorithm may be preconfigured or predefined, or may be determined by the first communication apparatus and the second communication apparatus through negotiation.

In Manner 1, the first key may be generated by encrypting the first information only once, and a manner of generating the first key is simple.

Manner 2: The first communication apparatus may encrypt the first information based on a first encryption algorithm, to obtain a fifth key. The first communication apparatus encrypts the fifth key based on a second encryption algorithm, to obtain a sixth key. The second encryption algorithm and the first encryption algorithm may be the same or different. Both the first encryption algorithm and the second encryption algorithm may be preconfigured or predefined, or may be determined by the first communication apparatus and the second communication apparatus through negotiation.

For example, the first communication apparatus may generate the fifth key in a key derivation manner. For example, the first communication apparatus may derive the third key and a physical layer parameter in the first information, to obtain an initial vector, and encrypt the initial vector and the physical layer subframe information in the first information based on the first encryption algorithm, to obtain the fifth key. The fifth key may be considered as a root key. A total quantity of bits of the initial vector is, for example, 512. The first communication apparatus may perform key extension on the fifth key based on the second encryption algorithm, to obtain the sixth key. The following describes possible forms of the first key in Manner 2.

1. The first key is all bits in the sixth key.
2. The first key is a part of bits in the sixth key.

For example, the first communication apparatus divides the sixth key to obtain a plurality of groups of keys, where total quantities of bits of any two groups of keys may be the same. The first communication apparatus may use one of the plurality of groups of keys as the first key.

For example, a total quantity of bits of the sixth key is u1*n, u1 is an integer greater than 1, n is a positive integer, * represents multiplication, and n bits in the sixth key are the first key.

Optionally, when the first key is one group of keys in the plurality of groups of keys, another group of keys other than the first key in the plurality of groups of keys may be used to encrypt another modulation symbol. For example, a group of keys (which may be considered as an example of the second key) other than the first key in the plurality of groups of keys may be used to encrypt the foregoing second modulation symbol, to obtain the encrypted second modulation symbol. In other words, a part or all of bits other than the first key in the fifth key may be further used to encrypt the second modulation symbol.

3. The first key is all bits in a seventh key.

The seventh key may be determined based on the fifth key and the sixth key. For example, the seventh key is a result of arranging the fifth key and the sixth key. For example, if the fourth key is 00001111, and the fifth key is 010101, the sixth key may be 00001111010101. Alternatively, the seventh key may be a result of encrypting the fifth key and the sixth key.

4. The first key is a part of bits in a seventh key. For a manner of obtaining the seventh key, refer to the foregoing content.

For example, the first communication apparatus divides the seventh key to obtain a plurality of groups of keys, where total quantities of bits of any two groups of keys may be the same. The first communication apparatus may use one of the plurality of groups of keys as the first key.

For example, a total quantity of bits of the seventh key is u2*n, u2 is an integer greater than 1, both u2 and n are positive integers, and n bits in the seventh key are the first key.

Optionally, a group of keys (which may be considered as an example of the second key) other than the first key in the plurality of groups of keys may be further used to encrypt the foregoing second modulation symbol, to obtain the encrypted second modulation symbol. In other words, a part or all of bits other than the first key in the seventh key may be further used to encrypt the second modulation symbol.

In Manner 2, the first communication apparatus is equivalent to encrypting the first information a plurality of times, so that security of the first key can be ensured. In addition, the first communication apparatus may further obtain, based on one calculation, a key used to encrypt a plurality of modulation symbols, helping reduce a quantity of key calculation times.

The foregoing describes a process of generating the first key. The following describes a manner in which the first communication apparatus encrypts the first modulation symbol based on the first key. A manner of encrypting the first modulation symbol based on the first key may include a manner shown in D1 or D2. The following separately provides descriptions.

D1. The first communication apparatus shifts the first modulation symbol based on the first key, to obtain an encrypted modulation symbol.

D1-1. The first communication apparatus may determine a translation length of the first modulation symbol in the constellation diagram based on the first key, and translate the first modulation symbol in the constellation diagram based on the translation length and a direction angle, to obtain the encrypted modulation symbol.

The direction angle indicates a direction and an angle for shifting the first modulation symbol. For example, the direction angle is +30 degrees, and the direction angle indicates shifting by 30 degrees in a clockwise direction of the constellation diagram. Alternatively, the direction angle is -30 degrees, and the direction angle indicates shifting by 30 degrees in an anticlockwise direction of the constellation diagram.

For example, the first communication apparatus may shift, in a direction indicated by the direction angle, the first modulation symbol by a specified length and by an angle indicated by the direction angle, to obtain the encrypted first modulation symbol.

For example, for a formula for calculating a translation length, refer to the following formula (1):

$$\rho = 1 + \frac{k_{ii} + 1}{2^{n-1}} \qquad (1)$$

$\rho$ represents the translation length, $k_{ii}$ represents the first key, and n represents a quantity of bits of the first key.

The foregoing formula (1) is applicable to a constellation diagram whose corresponding modulation scheme is QPSK.

Alternatively, for a formula for calculating a translation length, refer to the following formula (2):

$$\rho = \sqrt{5} + \frac{k_{li}+1}{2^{n-1}} \times \frac{1}{\sqrt{5}} \qquad\qquad (2)$$

The foregoing formula (2) is applicable to a constellation diagram whose corresponding modulation scheme is QAM.

In the case of D1-1, the direction angle may be determined by the first communication apparatus and the second communication apparatus through negotiation. Alternatively, the direction angle is preconfigured or predefined. For example, the direction angle may be ($\pi$/4). Alternatively, the direction angle may be determined by the first communication apparatus based on the translation length.

For example, the first communication apparatus may be preconfigured or predefined with a relationship (for example, referred to as a first relationship) between the translation length and the direction angle. After determining the translation length, the first communication apparatus may determine the direction angle based on the translation length and the first relationship.

The first relationship is, for example, $\rho cos\theta > 1/\sqrt{2}$ and $\rho sin\theta > 1/\sqrt{2}$. Optionally, when the first relationship further includes $\theta = \pi/4$, $\rho > 1$. The first relationship is applicable to a constellation diagram whose corresponding modulation scheme is QPSK.

Alternatively, the first relationship is, for example, $\rho cos\theta > 5/\sqrt{10}$ and $\rho sin\theta > 5/\sqrt{10}$. Optionally, when the first relationship further includes $\theta = \pi/4$, $\rho > \sqrt{5}$. The first relationship is applicable to a constellation diagram whose corresponding modulation scheme is QAM.

For example, FIG. 8 is a diagram of a process of obtaining an encrypted first modulation symbol according to an embodiment of this application. In FIG. 8, a direction of translating the first modulation symbol is an anticlockwise direction of the constellation diagram. As shown in FIG. 8, the first communication apparatus determines that the translation length is $\rho$ and the preconfigured direction angle is $\theta$. In this case, the first communication apparatus may translate the first modulation symbol a1 based on the translation length $\rho$ and the direction angle $\theta$ in the anticlockwise direction of the constellation diagram, to obtain the encrypted first modulation symbol a2.

D1-2. The first communication apparatus may determine a direction angle of the first modulation symbol in the constellation diagram based on the first key, and translate the first modulation symbol in the constellation diagram based on the direction angle and a translation length, to obtain the encrypted first modulation symbol.

For example, the direction angle is a phase corresponding to a third modulation symbol. The third modulation symbol may be obtained by modulating the first key based on the constellation diagram. In other words, the third modulation symbol may be understood as a modulation symbol corresponding to the first key.

In the case of D1-2, the translation length may be determined by the first communication apparatus and the second communication apparatus through negotiation, or may be preconfigured or predefined. For example, the translation length may be 2, or may be determined by the first communication apparatus based on the direction angle.

For example, the first communication apparatus may be preconfigured or predefined with a first relationship between the translation length and the direction angle. After determining the direction angle based on the first key, the first communication apparatus may determine the translation length based on the direction angle and the first relationship. For content of the first relationship, refer to the content of the first relationship in D1-1.

D1-3. The first communication apparatus may determine a translation length and a direction angle of the first modulation symbol in the constellation diagram based on the first key, and translate the first modulation symbol in the constellation diagram based on the translation length and the direction angle, to obtain the encrypted first modulation symbol.

For content of determining the translation length based on the first key, refer to the foregoing content described in D1-1. For content of determining the direction angle based on the first key, refer to the foregoing content described in D1-2.

D2. The first communication apparatus performs phase rotation on the first modulation symbol based on the first key, to obtain the encrypted first modulation symbol.

For example, the first communication apparatus may superimpose a phase of a third modulation symbol on a phase of the first modulation symbol, to obtain the encrypted first modulation symbol. For a meaning of the third modulation symbol, refer to the foregoing content.

For example, a manner of calculating the second modulation symbol is shown in the following formula (3).

$$angle(c_{0-li}) = angle(x_{li}) + \frac{k_{li}}{2^n} \times 2\pi \qquad\qquad (3)$$

angle(x) represents a phase of x, $c_{0-li}$ represents the second modulation symbol, $k_{li}$ represents the first key, and ( $\frac{k_{li}}{2^n} \times 2\pi$ ) represents a phase of a fifth modulation symbol.

When superimposition is performed on the phase of the first modulation symbol in the constellation diagram, a direction of superimposing the phase of the first modulation symbol may be further considered, and the direction of superimposing the phase of the first modulation symbol is, for example, translation in the anticlockwise direction or the clockwise direction of the constellation diagram. The phase superimposition direction may be preconfigured or predefined in the first communication apparatus, or may be determined by the first communication apparatus and the second communication apparatus through negotiation. This is not limited in this embodiment of this application.

C2. The first communication apparatus may use the first modulation symbol as a fourth modulation symbol. In this case, it may be considered that the first communication apparatus does not need to perform step S403, that is, step S403 is an optional step, and is shown by dashed lines in FIG. 4.

C3. The first communication apparatus performs post-processing on the first modulation symbol to obtain a post-processed modulation symbol. In this case, a fourth modulation symbol may be considered as the post-processed first modulation symbol. Post-processing includes, for example, inverse fast Fourier transform (inverse fast Fourier transform, IFFT) and/or cyclic prefix (cyclic prefix, CP) addition. IFFT is used to convert a signal represented in frequency domain into a signal represented in time domain. The encrypted first modulation symbol represented by a complex number may be considered as the signal represented by in frequency domain. CP addition refers to adding a CP to a signal represented by a time sequence.

C4. The first communication apparatus encrypts the first modulation symbol based on the first key, and performs post-processing on the encrypted first modulation symbol to obtain a fourth modulation symbol. The post-processing includes IFFT and/or CP.

The first communication apparatus may obtain the fourth modulation symbol in a plurality of manners. This is not specifically limited in this embodiment of this application. A manner used by the first communication apparatus to determine the fourth modulation symbol may be configured in a protocol, or may be determined by the first communication apparatus and the second communication apparatus through negotiation.

S404. The first communication apparatus processes the second modulation symbol to obtain a fifth modulation symbol.

E1. The first communication apparatus may encrypt the second modulation symbol based on the second key, to obtain the encrypted second modulation symbol, and use the encrypted second modulation symbol as a fifth modulation symbol.

For example, the first communication apparatus may determine the second key based on the first information. For a manner of determining the second key, refer to the foregoing content of determining the first key. Details are not described herein again.

Alternatively, the first communication apparatus determines the first key and the second key based on the first information.

For example, when the first key is a part of bits of the sixth key or the seventh key, the second key may be a part or all of bits other than the first key in the sixth key or the seventh key. This is equivalent to that the first communication apparatus determines the first key and the second key based on the first information.

For a manner of encrypting the second modulation symbol by the first communication apparatus based on the second key, refer to the foregoing content of encrypting the first modulation symbol based on the first key. Details are not described herein again.

E2. The first communication apparatus directly determines the second modulation symbol as a fifth modulation symbol. In this case, it may be considered that the first communication apparatus does not need to perform step S404, that is, step S404 is an optional step, and is shown by dashed lines in FIG. 4.

E3. The first communication apparatus performs post-processing on the second modulation symbol to obtain a post-processed second modulation symbol, and uses the post-processed first modulation symbol as a fifth modulation symbol.

E4. The first communication apparatus encrypts the second modulation symbol to obtain the encrypted second modulation symbol, and performs post-processing on the encrypted second modulation symbol to obtain a fifth modulation symbol.

The first communication apparatus may perform steps S403 and S404 in any sequence. For example, S403 is performed before S404; or S404 is performed before S403; or S403 and S404 are performed simultaneously. This is not limited in this embodiment of this application.

S405: The first communication apparatus sends the fourth modulation symbol and the fifth modulation symbol to the second communication apparatus. Correspondingly, the second communication apparatus receives the fourth modulation symbol and the fifth modulation symbol from the first communication apparatus.

The fourth modulation symbol and the fifth modulation symbol may be sent in any sequence. For example, the first communication apparatus first sends the fourth modulation symbol, and then sends the fifth modulation symbol; or the first communication apparatus simultaneously sends the fourth modulation symbol and the fifth modulation symbol; or the first communication apparatus first sends the fifth modulation symbol, and then sends the fourth modulation symbol. This is not limited in this embodiment of this application.

When one of the first communication apparatus and the second communication apparatus is a terminal device, and the other is a network device, the first communication apparatus may send the fourth modulation symbol and the fifth modulation symbol to the second communication apparatus through a channel air interface (for example, a Uu interface).

S406: The second communication apparatus obtains the first modulation symbol based on the fourth modulation symbol.

Different manners in which the first communication apparatus obtains the fourth modulation symbol lead to different manners in which the second communication apparatus obtains the first modulation symbol. The following separately provides descriptions.

If the first communication apparatus determines the fourth modulation symbol in the manner shown in C1, the second communication apparatus may decrypt the fourth modulation symbol based on the first key, to obtain the first modulation symbol.

The first key may be a key preconfigured or predefined in the second communication apparatus, for example, may be predefined in the second communication apparatus by using a protocol. Alternatively, the first key may be generated by the second communication apparatus based on the first information. For a meaning of the first information, refer to the foregoing content.

The third key may be a key preconfigured or predefined in the second communication apparatus, or the third key may be generated by the first communication apparatus based on an eighth key. For content of the eighth key, refer to the foregoing content of the fourth key, and for a manner in which the second communication apparatus generates the third key based on the eighth key, refer to the foregoing content in which the first communication apparatus generates the third key based on the fourth key. The eighth key may be the same as or different from the fourth key. The eighth key may be preconfigured or predefined at a non-physical layer of the second communication apparatus. The non-physical layer includes, for example, a radio resource control layer, a packet data convergence protocol layer, a radio link control layer, or a medium access control layer. For a manner in which the second communication apparatus obtains the eighth key, refer to the foregoing content in which the first communication apparatus obtains the fourth key.

Optionally, the third key may be a key shared by the first communication apparatus and the second communication apparatus. In this case, the first communication apparatus and the second communication apparatus may determine that the peer party has the third key, thereby ensuring that the first communication apparatus and the second communication apparatus generate a consistent first key.

Different manners in which the first communication apparatus encrypts the second modulation symbol lead to different manners in which the second communication apparatus decrypts the second modulation symbol. The following separately provides descriptions.

If the first communication apparatus encrypts the first modulation symbol in the manner of shift encryption shown in the foregoing D1, the second communication apparatus may perform shift decryption on the second modulation symbol.

For example, the translation length of the first modulation symbol in the constellation diagram is determined based on the first key, and the fourth modulation symbol is translated in the constellation diagram based on the translation length and the direction angle, to obtain the first modulation symbol. Translating the second modulation symbol in the constellation diagram is, for example, translating the fourth modulation symbol in the constellation diagram in a direction opposite to a direction of translating the first modulation symbol by the first communication apparatus. For content in which the second communication apparatus determines a direction of translating the first modulation symbol or a direction opposite to the direction of translating the first modulation symbol, refer to the foregoing content in which the first communication apparatus determines the direction of translating the first modulation symbol. Details are not described herein.

If the first communication apparatus encrypts the first modulation symbol by using the phase rotation encryption manner shown in D2, the second communication apparatus may perform phase rotation decryption on the fourth modulation symbol, for example, perform phase rotation on the fourth modulation symbol based on the first key, to obtain the first modulation symbol.

For example, the first communication apparatus may subtract the phase of the third modulation symbol from a phase of the fourth modulation symbol, to obtain the first modulation symbol. Performing phase rotation on the fourth modulation symbol is, for example, subtracting the phase of the third modulation symbol in the constellation diagram in the direction of superimposing the phase of the first modulation symbol by the first communication apparatus. For content in which the second communication apparatus determines the direction of superimposing the phase of the first modulation symbol, refer to the foregoing content in which the first communication apparatus determines the direction of superimposing the phase of the first modulation symbol. Details are not described herein.

If the first communication apparatus determines the fourth modulation symbol in the manner shown in C2, the second communication apparatus may directly use the fourth modulation symbol as the first modulation symbol. Certainly, in this case, it may be considered that the second communication apparatus does not need to perform step S406, that is, step S406 is an optional step, and is shown by dashed lines in FIG. 4.

If the first communication apparatus determines the fourth modulation symbol in the manner shown in C3, the second communication apparatus may perform reverse processing corresponding to post-processing on the fourth modulation symbol, to obtain the first modulation symbol. Reverse processing corresponding to IFFT is FFT, and reverse processing corresponding to CP addition is CP removal.

If the first communication apparatus determines the fourth modulation symbol in the manner shown in C4, the second communication apparatus may decrypt the fourth modulation symbol based on the first key, to obtain the decrypted fourth modulation symbol, and perform reverse processing corresponding to post-processing on the decrypted fourth modulation symbol, to obtain the first modulation symbol. For content of decrypting the fourth modulation symbol based on the first key, refer to the foregoing descriptions, and for content of reverse processing, refer to the foregoing content.

The second communication apparatus may obtain the first modulation symbol in a plurality of manners. This is not specifically limited in this embodiment of this application. A manner used by the second communication apparatus to determine the first modulation symbol may be configured in a protocol, or may be determined by the first communication apparatus and the second communication apparatus through negotiation.

S407: The second communication apparatus obtains the second modulation symbol based on the fifth modulation symbol.

Different manners in which the first communication apparatus obtains the fifth modulation symbol lead to different manners in which the second communication apparatus obtains the second modulation symbol. The following separately provides descriptions.

If the first communication apparatus determines the fifth modulation symbol in the manner shown in E1, the second communication apparatus may decrypt the fifth modulation symbol based on the second key, to obtain the second modulation symbol.

For a manner in which the second communication apparatus obtains the second key, refer to the foregoing content in which the second communication apparatus obtains the second key. Details are not described herein again. For content of decrypting the fifth modulation symbol by the second communication apparatus, refer to the foregoing content of decrypting the fourth modulation symbol by the second communication apparatus.

If the first communication apparatus determines the fifth modulation symbol in the manner shown in E2, the second communication apparatus may not need to perform step S407, that is, step S407 is an optional step, and is shown by dashed lines in FIG. 4.

If the first communication apparatus determines the fifth modulation symbol in the manner shown in E3, the second communication apparatus may perform reverse processing corresponding to post-processing on the fifth modulation symbol, to obtain the second modulation symbol.

If the first communication apparatus determines the fifth modulation symbol in the manner shown in E4, the second communication apparatus may decrypt the fifth modulation symbol, and perform reverse processing of post-processing on the decrypted fifth modulation symbol, to obtain the second modulation symbol.

The second communication apparatus may perform steps S406 and S407 in any sequence. For example, the second communication apparatus first performs S406 and then performs S407; or first performs S407 and then performs S406; or simultaneously performs steps S406 and S407. This is not limited in this embodiment of this application.

S408: The second communication apparatus demodulates the first modulation symbol based on the constellation diagram, to obtain the M bits.

For a manner in which the second communication apparatus obtains the constellation diagram, refer to the foregoing content in which the first communication apparatus obtains the constellation diagram. After determining the first modulation symbol, the second communication apparatus may demap (or demodulate) the first modulation symbol by using the constellation diagram, to obtain the M bits. When the first communication apparatus performs channel coding to obtain the M bits, the second communication apparatus may perform channel decoding on the M bits.

For example, when the channel coding is to add the first check bit sequence, the M bits include the first original bit sequence and the first check bit sequence. In this case, the second communication apparatus may determine the first check bit sequence and the first original bit sequence in the M bits based on the M bits. Optionally, the second communication apparatus may further check the first original bit sequence based on the first check bit sequence, to check whether the second communication apparatus receives the correct first original bit sequence.

S409: The second communication apparatus demodulates the second modulation symbol based on the constellation diagram, to obtain the N bits.

For a manner in which the second communication apparatus demodulates the second modulation symbol, refer to the foregoing content of demodulating the first modulation symbol. Details are not described herein. When the first communication apparatus performs channel coding to obtain the N bits, the second communication apparatus may perform channel decoding on the N bits.

For example, when the channel coding is to add the second check bit sequence, the N bits include the second original bit sequence and the second check bit sequence. In this case, the second communication apparatus may determine the second check bit sequence and the second original bit sequence in the N bits based on the N bits. Optionally, the second communication apparatus may further check the second original bit sequence based on the second check bit sequence, to check whether the second communication apparatus receives the correct second original bit sequence.

The second communication apparatus may perform steps S408 and S409 in any sequence. For example, the second communication apparatus first performs S408 and then performs S409; or first performs S409 and then performs S408; or simultaneously performs steps S408 and S409. This is not limited in this embodiment of this application.

In this embodiment of this application, because the constellation diagram is designed based on modulation symbols that are corresponding along the horizontal axis or the vertical axis, that is, the constellation diagram is not designed by using a Gray code mapping rule, bit sequences corresponding to two adjacent modulation symbols in the constellation diagram are arranged randomly. This increases difficulty of illegal demodulation by an eavesdropper, and helps improve communication security. Further, after the modulation symbol modulated in this embodiment of this application is used in a simulation test, a bit error ratio (bit error ratio, BER) corresponding to eavesdropping by a simulated illegal node is close to 0.5, so that communication security can be ensured. Because the BER is close to 0.5, a probability that a corresponding bit is correct is 0.5, and an error probability is also 0.5. From a perspective of an information entropy, uncertainty is the largest, and the information entropy is the largest. Therefore, after the eavesdropper performs illegal demodulation, it is equivalent to that no valid information is obtained, and it is equivalent to that the eavesdropper still needs to randomly guess the bit, thereby increasing difficulty for the eavesdropper to illegally obtain the bit, and improving communication security. In addition, in this embodiment of this application, the modulation symbol may be further encrypted, to further improve communication security. In addition, the first communication apparatus and the second communication apparatus generate the first key by using the shared third key. This ensures stability of generating the first key, and helps ensure smooth demodulation by the second communication apparatus.

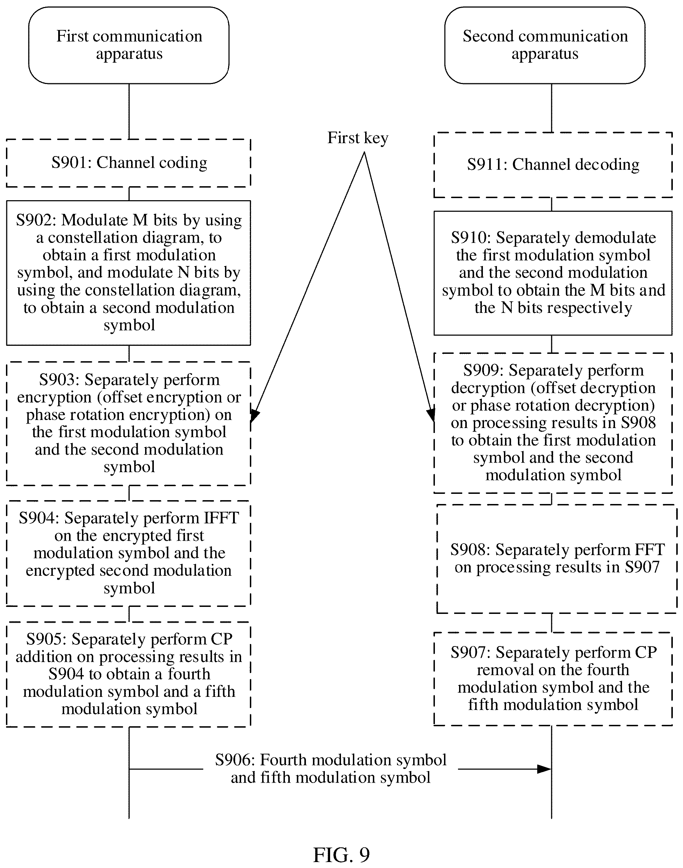

The following describes the communication method provided in embodiments of this application by using an example in which the first communication apparatus obtains the fourth modulation symbol in the manner in C4 and obtains the fifth modulation symbol in the manner in E4. FIG. 9 is a diagram of a communication method according to an embodiment of this application.

S901: A first communication apparatus performs channel coding.

For example, the first communication apparatus performs channel coding on a first original bit sequence to obtain M bits, and performs channel coding on a second original bit sequence to obtain N bits. For a channel coding scheme, refer to the foregoing content.

S902: The first communication apparatus modulates the M bits by using a constellation diagram to obtain a first modulation symbol, and modulates the N bits by using the constellation diagram to obtain a second modulation symbol.

S903: The first communication apparatus separately encrypts the first modulation symbol and the second modulation symbol. In this way, the encrypted first modulation symbol and the encrypted second modulation symbol are obtained. For example, the foregoing shift encryption or phase rotation encryption is used for encryption. For a manner of shift encryption or phase rotation encryption, refer to the content described above.

S904: The first communication apparatus separately performs IFFT on the encrypted first modulation symbol and the encrypted second modulation symbol. In this way, the first modulation symbol on which IFFT processing is performed and the second modulation symbol on which IFFT processing is performed can be obtained. For content of IFFT, refer to the foregoing descriptions.

S905: The first communication apparatus separately performs CP addition on processing results in S904 to obtain a fourth modulation symbol and a fifth modulation symbol.

For example, the first communication apparatus performs CP addition on the first modulation symbol obtained through IFFT processing, to obtain the fourth modulation symbol, and performs CP addition on the second modulation symbol obtained through IFFT processing, to obtain the fifth modulation symbol. For content of CP addition, refer to the foregoing descriptions.

S906: The first communication apparatus sends the fourth modulation symbol and the fifth modulation symbol to the second communication apparatus. Correspondingly, the second communication apparatus receives the fourth modulation symbol and the fifth modulation symbol from the first communication apparatus.

For a sequence and a manner in which the first communication apparatus sends the fourth modulation symbol and the fifth modulation symbol to the second communication apparatus, refer to the foregoing content.

S907: The second communication apparatus separately performs CP removal on the fourth modulation symbol and the fifth modulation symbol. In this way, the fourth modulation symbol on which CP removal is performed and the fifth modulation symbol on which CP removal is performed are obtained. For content of CP removal, refer to the foregoing descriptions.

S908: The second communication apparatus separately performs FFT on processing results in S907. For example, the second communication apparatus performs FFT on the fourth modulation symbol obtained through CP removal, to obtain the fourth modulation symbol on which FFT is performed, and performs FFT on the fifth modulation symbol obtained through CP removal, to obtain the fifth modulation symbol on which FFT is performed. For content of FFT, refer to the foregoing content.

S909: The second communication apparatus separately decrypts processing results in S908, to obtain the first modulation symbol and the second modulation symbol.

The decryption includes, for example, shift decryption or phase rotation decryption. For content of shift decryption or phase rotation decryption, refer to the foregoing content. For example, the second communication apparatus decrypts the fourth modulation symbol obtained through FFT, to obtain the first modulation symbol, and decrypts the fifth modulation symbol obtained through FFT, to obtain the second modulation symbol.

S910: The second communication apparatus separately demodulates the first modulation symbol and the second modulation symbol to obtain the M bits and the N bits. For content of demodulation, refer to the foregoing content.

S911: The second communication apparatus performs channel decoding. For content of channel decoding, refer to the foregoing descriptions.

S901 and S911 are optional steps, and S904 to S908 are also optional steps, which are shown by dashed lines in FIG. 9.

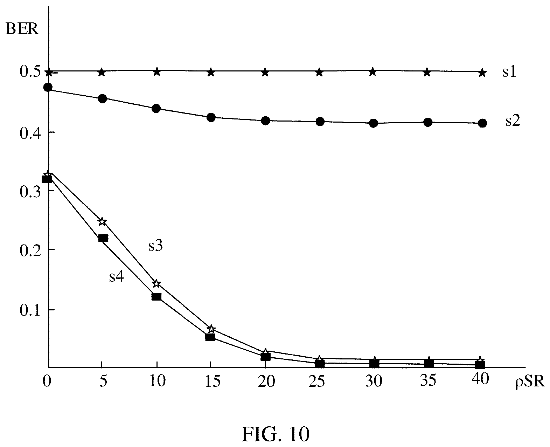

To verify an effect of the embodiment shown in FIG. 9, simulation measurement is performed for the embodiment in FIG. 9 in embodiments of this application. FIG. 10 is a diagram of a result of a simulation test according to an embodiment of this application. In FIG. 10, a vertical axis represents a BER, a horizontal axis represents $\rho_{SR}$ that represents a power loss in a communication process, and a unit of the power loss is decibel (db). A modulation scheme of a constellation diagram in FIG. 10 is, for example, 16QAM.

As shown in FIG. 10, a curve shown by s1 represents a diagram of a corresponding BER when a modulation symbol obtained by using solution 1 (that is, the solution shown in FIG. 9 (including steps S901 to S911)) is demodulated by a simulated illegal node for eavesdropping. A curve shown by s2 represents a diagram of a corresponding BSR when a modulation symbol obtained through modulation by using solution 2 (that is, a constellation diagram using a Gray code mapping rule) is demodulated by a simulated illegal node for eavesdropping. A curve shown by s3 represents a diagram of a corresponding BSR when a modulation symbol obtained by using solution 1 is demodulated by a simulated legal node. A curve shown by s4 represents a diagram of a corresponding BER when a modulation symbol obtained by using solution 3 (that is, another embodiment shown in FIG. 9 (including steps S901 and S902, S904 to S908, and S910 and S911)) is demodulated by a simulated legal node.

As shown in FIG. 10, when modulation is performed by using solution 1, a BSR corresponding to demodulation by the eavesdropping node is close to 0.5. When modulation is performed by using solution 2, a BSR corresponding to demodulation by the eavesdropping node is less than 0.5. It can be learned that, when modulation is performed by using solution 1, communication security can be improved. In addition, it can be learned from FIG. 10 that, if solution 1 is used, that is, the modulation symbol is encrypted, the first communication apparatus loses a part of power, but the power loss is relatively low.

In a constellation diagram technology, a bitstream may be mapped to a modulation symbol in a constellation diagram, which is equivalent to converting the bitstream into a form of an electromagnetic wave. However, this modulation scheme is only a form of converting a bitstream, and it is difficult to ensure communication security.

In view of this, an embodiment of this application further provides a communication method. In the communication method, a first communication apparatus may generate a first key based on a third key, and encrypt a first modulation symbol based on the first key, to improve transmission security.

The following describes the method provided in embodiments of this application with reference to the accompanying drawings. In the accompanying drawings corresponding to embodiments of this application, all steps represented by dashed lines are optional steps. A first communication apparatus in embodiments of this application is, for example, the first communication apparatus in FIG. 2, and a second communication apparatus is, for example, the second communication apparatus in FIG. 2. For an architecture of protocol stacks of the first communication apparatus and the second communication apparatus, refer to the foregoing diagram of the architecture of the protocol stacks in FIG. 3. In embodiments of this application, an example in which the first communication apparatus serves as a transmitter and the second communication apparatus serves as a receiver is used for description.

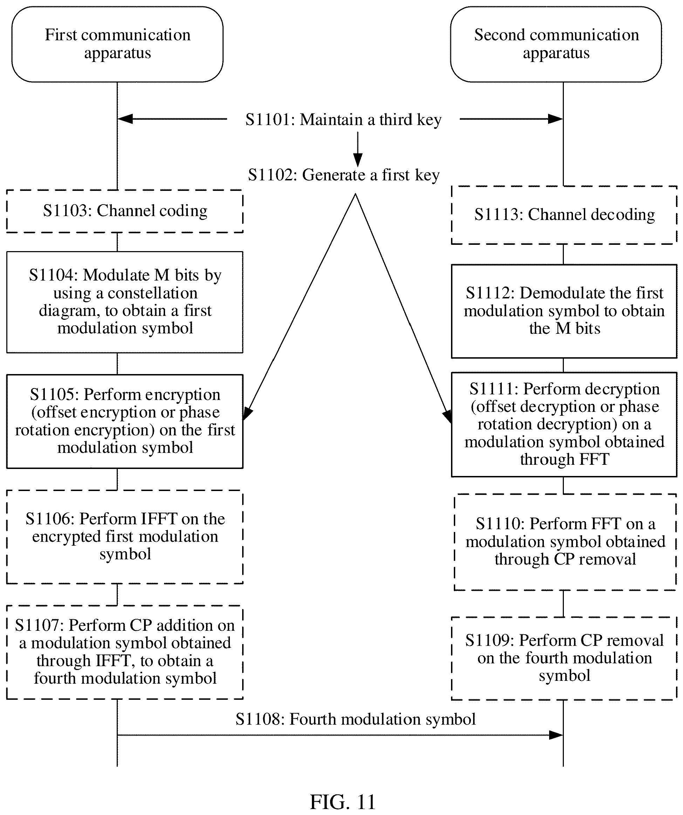

FIG. 11 is a schematic flowchart of a communication method according to an embodiment of this application.

S1101: A first communication apparatus and a second communication apparatus maintain a third key. For a manner of obtaining the third key by the first communication apparatus and the second communication apparatus and content of the third key, refer to the foregoing content.

S1102: Both the first communication apparatus and the second communication apparatus generate a first key. For a manner of generating the first key and content of the first key, refer to the foregoing content.

S1101 and S1102 may be performed by the first communication apparatus and the second communication apparatus in a first process. For example, the first process is that the first communication apparatus accesses the second communication apparatus or a core network, or the second communication apparatus accesses the first communication apparatus or a core network. This is not specifically limited in this embodiment of this application.

S1103: The first communication apparatus performs channel coding. For content of channel coding, refer to the foregoing descriptions.

S1104: The first communication apparatus modulates M bits by using a constellation diagram, to obtain a first modulation symbol.

The constellation diagram in this embodiment of this application may be a constellation diagram that conforms to a Gray code mapping rule, or a constellation diagram that satisfies any one of the foregoing first conditions in A1 to A6. For content of the first condition, refer to the foregoing content.

S1105: The first communication apparatus encrypts the first modulation symbol. The encryption includes, for example, shift encryption shown in C1 or phase rotation encryption shown in C2. For a manner of shift encryption or phase rotation encryption, refer to the content described above.

S1106: The first communication apparatus performs IFFT on the encrypted first modulation symbol. For content of IFFT, refer to the foregoing descriptions.

S1107: The first communication apparatus performs CP addition on a modulation symbol obtained through IFFT, to obtain a fourth modulation symbol. For content of CP addition, refer to the foregoing descriptions.

S1108: The first communication apparatus sends the fourth modulation symbol to the second communication apparatus. Correspondingly, the second communication apparatus receives the fourth modulation symbol from the first communication apparatus. For a manner in which the first communication apparatus sends the fourth modulation symbol to the second communication apparatus, refer to the foregoing content.

S1109: The second communication apparatus performs CP removal on the fourth modulation symbol. For content of CP removal, refer to the foregoing descriptions.

S1110: The second communication apparatus performs FFT on a modulation symbol obtained through CP removal. For content of FFT, refer to the foregoing content.

S1111: The second communication apparatus decrypts a modulation symbol obtained through FFT. A decryption manner includes shift decryption shown in E1 or phase rotation decryption shown in E2. For content of shift decryption or phase rotation decryption, refer to the foregoing content. The second communication apparatus may obtain the first modulation symbol after performing S812.

S1112: The second communication apparatus demodulates the first modulation symbol to obtain the M bits. For content of demodulation, refer to the foregoing content.

S1113: The second communication apparatus performs channel decoding. For content of channel decoding, refer to the foregoing descriptions.

S1103 and S1113 are optional steps. S1106 to S1110 are optional steps, and are shown by dashed lines in FIG. 11.

**In a** possible implementation, the first communication apparatus may also modulate the N bits to obtain a second modulation symbol, process the second modulation symbol to obtain a fifth modulation symbol, and send the fifth modulation symbol to the second communication apparatus. Correspondingly, the second communication apparatus may process the fifth modulation symbol to obtain the second modulation symbol, and demodulate the second modulation symbol to obtain the N bits. For a process in this implementation, refer to the content described in FIG. 4 or FIG. 9. Details are not described herein again.

In this embodiment of this application, the first communication apparatus may encrypt the first modulation symbol, to ensure communication security. In addition, because both the first communication apparatus and the second communication apparatus share the third key, stability of the first key generated by the first communication apparatus and the second communication apparatus is ensured, so that the second communication apparatus can smoothly decrypt the encrypted first modulation symbol, and reliability of communication between the first communication apparatus and the second communication apparatus is ensured.

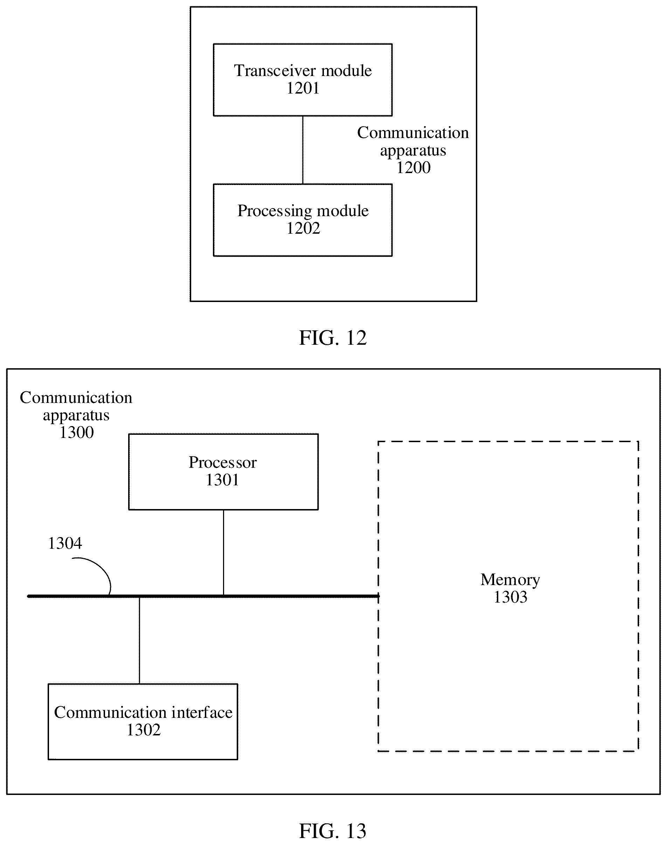

An embodiment of this application provides a communication apparatus. FIG. 12 is a diagram of a structure of a communication apparatus according to an embodiment of this application. As shown in FIG. 12, the communication apparatus 1200 includes a transceiver module 1201 and a processing module 1202.

In a first embodiment, the communication apparatus 1200 may be configured to implement the function of the first communication apparatus in FIG. 4 or FIG. 9. Correspondingly, the communication apparatus 1200 may implement the steps performed by the first communication apparatus in FIG. 4 or FIG. 9.

For example, the communication apparatus 1200 is configured to implement the function of the first communication apparatus in FIG. 4.

For example, the transceiver module 1201 may be configured to send a second modulation symbol to a second communication apparatus, and the processing module 1202 may be configured to perform steps S401 and S402. Optionally, the processing module 1202 may be configured to send a fourth modulation symbol and the fifth modulation symbol to the second communication apparatus. Optionally, the processing module 1202 may be further configured to perform steps S403 and S404. For the second modulation symbol and content of each step, refer to the content in FIG. 4.

For another example, the communication apparatus 1200 is configured to implement the function of the first communication apparatus in FIG. 9.

For example, the transceiver module 1201 may be configured to send a fourth modulation symbol and a fifth modulation symbol to a second communication apparatus, and the processing module 1202 may be configured to perform step S902. Optionally, the processing module 1202 may be further configured to perform steps S901 and S903 to S905.

In a second embodiment, the communication apparatus 1200 may be configured to implement the function of the second communication apparatus in FIG. 4 or FIG. 9. Correspondingly, the communication apparatus 1200 may implement the steps performed by the second communication apparatus in FIG. 4 or FIG. 9.

For example, the communication apparatus 1200 is configured to implement the function of the second communication apparatus in FIG. 4.

For example, the transceiver module 1201 may be configured to receive a fourth modulation symbol and a fifth modulation symbol from a first communication apparatus, and the processing module 1202 may be configured to perform steps S408 and S409. Optionally, the processing module 1202 may be configured to perform steps S406 and S407.

For another example, the communication apparatus 1200 is configured to implement the function of the second communication apparatus in FIG. 9.

For example, the transceiver module 1201 may be configured to receive a fourth modulation symbol and a fifth modulation symbol from a first communication apparatus, and the processing module 1202 may be configured to perform step S910. Optionally, the processing module 1202 may be further configured to perform steps S907 to S909 and S911.

In a third embodiment, the communication apparatus 1200 may be configured to implement the function of the first communication apparatus in FIG. 11. Correspondingly, the communication apparatus 1200 may implement the steps performed by the first communication apparatus in FIG. 11.

For example, the transceiver module 1201 may be configured to send a fourth modulation symbol to a second communication apparatus, and the processing module 1202 may be configured to perform steps S1104 and S1105. Optionally, the processing module 1202 may be further configured to perform steps S1103 and S1106 and S1107.

In a fourth embodiment, the communication apparatus 1200 may be configured to implement the function of the second communication apparatus in FIG. 11. Correspondingly, the communication apparatus 1200 may implement the steps performed by the second communication apparatus in FIG. 11.

For example, the transceiver module 1201 may be configured to receive a fourth modulation symbol from a first communication apparatus, and the processing module 1202 may be configured to perform steps S1111 and S1112. Optionally, the processing module 1202 may be further configured to perform steps S1109 and S1110 and S1113. For content of each step in FIG. 12, refer to the foregoing content. Details are not described herein again.

An embodiment of this application provides a communication apparatus. FIG. 13 is a diagram of a structure of a communication apparatus according to an embodiment of this application. As shown in FIG. 13, the communication apparatus 1300 includes a processor 1301 and a communication interface 1302. The processor 1301 and the communication interface 1302 are coupled to each other. It may be understood that the communication interface 1302 may be a transceiver or an input/output interface. The processor 1301 and the communication interface 1302 may implement the communication method in any one of FIG. 4, FIG. 9, or FIG. 11.

It may be understood that, the processor 1301 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

Optionally, the communication apparatus 1300 may further include a memory 1303, which is shown by a dashed box in FIG. 13. The memory 1303 is configured to store instructions executed by the processor 1301, or store input data required for running instructions by the processor 1301, or store data generated after the processor 1301 runs instructions.

Any two of the processor 1301, the communication interface 1302, and the memory 1303 may communicate with each other through a bus 1304. The bus may be a peripheral component interconnect (peripheral component interconnect, PCI) bus, an extended industry standard architecture (extended industry standard architecture, EISA) bus, or the like. The bus 1304 may be classified into an address bus, a data bus, a control bus, or the like.

The memory 1303 may include a volatile memory (volatile memory), for example, a random access memory (random access memory, RAM). The memory 1303 may further include a non-volatile memory (non-volatile memory), for example, a read-only memory (read-only memory, ROM), a flash memory, a mechanical hard disk drive (hard disk drive, HDD), or a solid state drive (solid state drive, SSD).

Optionally, the processor 1301 is configured to implement the function of the processing module 1202, and the communication interface 1302 is configured to implement the function of the transceiver module 1201.

An embodiment of this application provides a communication system. The communication system includes the first communication apparatus in FIG. 4 or FIG. 9 and the second communication apparatus in FIG. 4 or FIG. 9.

An embodiment of this application provides a communication system. The communication system includes the first communication apparatus in FIG. 11 and the second communication apparatus in FIG. 11.

An embodiment of this application provides a chip system. The chip system includes a processor and an interface. The processor is configured to invoke instructions from the interface and run the instructions. When executing the instructions, the processor implements any one of the foregoing communication methods, for example, any communication method in FIG. 4, FIG. 9, or FIG. 11.

An embodiment of this application provides a computer-readable storage medium. The computer-readable storage medium is configured to store a computer program or instructions. When the computer program or the instructions are run, any one of the foregoing communication methods is implemented, for example, any communication method in FIG. 4, FIG. 9, or FIG. 11 is implemented.

An embodiment of this application provides a computer program product including instructions. When the computer program product runs on a computer, any one of the foregoing communication methods is implemented, for example, any communication method in FIG. 4, FIG. 9, or FIG. 11 is implemented.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example storage medium is coupled to a processor, so that the processor can read information from the storage medium and can write information into the storage medium. Certainly, the storage medium may alternatively be a part of the processor. The processor and the storage medium may be located in an ASIC. In addition, the ASIC may be located in a base station or a terminal. Certainly, the processor and the storage medium may exist in the base station or the terminal as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device such as a server or a data center integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

**Claims**

1. A communication method, applied to a first communication apparatus, wherein the method comprises:

modulating M bits based on a constellation diagram to obtain a first modulation symbol, and modulating N bits based on the constellation diagram to obtain a second modulation symbol, wherein both M and N are positive integers; and
sending the first modulation symbol and the second modulation symbol to a second communication apparatus, wherein
a first bit sequence and a second bit sequence have different values at a first location, and a third bit sequence and a fourth bit sequence are the same; or a first bit sequence and a second bit sequence are the same, and a third bit sequence and a fourth bit sequence have different values at a second location; and

the first bit sequence is a bit sequence corresponding to a real part of the first modulation symbol, the second bit sequence is a bit sequence corresponding to a real part of the second modulation symbol, the third bit sequence is a bit sequence corresponding to an imaginary part of the first modulation symbol, the fourth bit sequence is a bit sequence corresponding to an imaginary part of the second modulation symbol, the first location is a location of any bit in the first bit sequence or the second bit sequence, the second location is a location of any bit in the third bit sequence or the fourth bit sequence, and the first modulation symbol and the second modulation symbol are symmetrical along a horizontal axis or a vertical axis of the constellation diagram.

2. The method according to claim 1, wherein before sending the first modulation symbol and the second modulation symbol to the second communication apparatus, the method further comprises:

encrypting the first modulation symbol based on a first key, to obtain the encrypted first modulation symbol; and/or encrypting the second modulation symbol based on a second key, to obtain the encrypted second modulation symbol.

3. The method according to claim 2, wherein the first key and/or the second key are/is generated based on first information, and the first information comprises a third key; and
the third key is a preconfigured or predefined key, or the third key is generated based on a fourth key, and the fourth key is a preconfigured or predefined key or a key configured by a core network.

4. The method according to claim 3, wherein the third key is a key shared by the first communication apparatus and the second communication apparatus.

5. The method according to claim 3 or 4, wherein the first information further comprises information that has been sent by the first communication apparatus to the second communication apparatus, and/or information that has been received by the first communication apparatus from the second communication apparatus.

6. The method according to any one of claims 3 to 5, wherein the method further comprises:

encrypting the first information based on a first encryption algorithm, to obtain a fifth key; and
encrypting the fifth key based on a second encryption algorithm, to obtain a sixth key, wherein
the first key is a part or all of bits in the sixth key, or the first key is a part or all of bits in a seventh key, and the seventh key is determined based on the fifth key and the sixth key.

7. The method according to claim 6, wherein the second key is a part or all of bits other than the first key in the sixth key, or a part or all of bits other than the first key in the seventh key.

8. The method according to any one of claims 2 to 7, wherein encrypting the first modulation symbol based on the first key, to obtain the encrypted first modulation symbol comprises:

determining a translation length and/or a direction angle of the first modulation symbol in the constellation diagram based on the first key; and
shifting the first modulation symbol in the constellation diagram by the translation length in a direction indicated by the direction angle, to obtain the encrypted first modulation symbol.

9. The method according to claim 8, wherein the translation length and the direction angle satisfy the following relationship:

$$\rho\cos\theta > 1/\sqrt{2} \ \text{ and } \ \rho\sin\theta > 1/\sqrt{2};$$

or

$$\rho\cos\theta > 5/\sqrt{10} \ \text{ and } \ \rho\sin\theta > 5/\sqrt{10},$$

wherein
$\rho$ represents the translation length, and $\theta$ represents the direction angle.

10. The method according to any one of claims 2 to 7, wherein encrypting the first modulation symbol based on the first key, to obtain the encrypted first modulation symbol comprises:
superimposing a phase of a third modulation symbol onto a phase of the first modulation symbol, to obtain the encrypted first modulation symbol, wherein the third modulation symbol is obtained by modulating the first key based on the constellation diagram.

11. A communication method, applied to a second communication apparatus, wherein the method comprises:

receiving a first modulation symbol and a second modulation symbol from a first communication apparatus; and
demodulating the first modulation symbol based on a constellation diagram to obtain M bits, and demodulating the second modulation symbol based on the constellation diagram to obtain N bits, wherein N and M are positive integers, wherein
a first bit sequence and a second bit sequence have different values at a first location, and a third bit sequence and a fourth bit sequence are the same; or a first bit sequence and a second bit sequence are the same, and a third bit sequence and a fourth bit sequence have different values at a second location; and
the first bit sequence is a bit sequence corresponding to a real part of the first modulation symbol, the second bit sequence is a bit sequence corresponding to a real part of the second modulation symbol, the third bit sequence is a bit sequence corresponding to an imaginary part of the first modulation symbol, the fourth bit sequence is a bit sequence corresponding to an imaginary part of the second modulation symbol, the first location is a location of any bit in the first bit sequence or the second bit sequence, the second location is a location of any bit in the third bit sequence or the fourth bit sequence, and the first modulation symbol and the second modulation symbol are symmetrical along a horizontal axis or a vertical axis of the constellation diagram.

12. The method according to claim 11, wherein
receiving the first modulation symbol and the second modulation symbol from the first communication apparatus comprises:

receiving the encrypted first modulation symbol and the encrypted second modulation symbol from the first communication apparatus; and
the method further comprises:

decrypting the encrypted first modulation symbol based on a first key, to obtain the first modulation symbol; and/or
decrypting the encrypted second modulation symbol based on a second key, to obtain the second modulation symbol.

13. The method according to claim 12, wherein the first key and/or the second key are/is generated based on first information, and the first information comprises a third key; and
the third key is a preconfigured or predefined key, or the third key is generated based on an eighth key, and the eighth key is a preconfigured or predefined key or a key configured by a core network.

14. The method according to claim 13, wherein the third key is a key shared by the first communication apparatus and the second communication apparatus.

15. The method according to claim 13 or 14, wherein the first information further comprises information that has been sent by the second communication apparatus to the first communication apparatus, and/or information that has been received by the second communication apparatus from the first communication apparatus.

16. The method according to any one of claims 13 to 15, wherein the method further comprises:

encrypting the first information based on a first encryption algorithm, to obtain a fifth key; and
encrypting the fifth key based on a second encryption algorithm, to obtain a sixth key, wherein the first key is a part or all of bits in the sixth key, or the first key is a part or all of bits in a seventh key, and the seventh key is determined based on the fifth key and the sixth key.

17. The method according to claim 16, wherein the second key is a part or all of bits other than the first key in the sixth key, or a part or all of bits other than the first key in the seventh key.

**18.** The method according to any one of claims 12 to 17, wherein decrypting the encrypted first modulation symbol based on the first key, to obtain the first modulation symbol comprises:

determining a translation length and/or a direction angle of the first modulation symbol in the constellation diagram based on the first key; and

shifting the encrypted first modulation symbol in the constellation diagram by the translation length in a direction opposite to a direction indicated by the direction angle, to obtain the encrypted first modulation symbol.

**19.** The method according to claim 18, wherein the translation length and the direction angle satisfy the following relationship:

$$\rho\cos\theta > 1/\sqrt{2} \ \text{ and } \ \rho\sin\theta > 1/\sqrt{2};$$

or

$$\rho\cos\theta > 5/\sqrt{10} \ \text{ and } \ \rho\sin\theta > 5/\sqrt{10},$$

wherein

$\rho$ represents the translation length, and $\theta$ represents the direction angle.

**20.** The method according to any one of claims 12 to 18, wherein decrypting the encrypted first modulation symbol based on the first key, to obtain the first modulation symbol comprises:

subtracting a phase of a third modulation symbol from a phase of the encrypted first modulation symbol, to obtain the first modulation symbol, wherein the third modulation symbol is obtained by modulating the first key based on the constellation diagram.

**21.** A communication apparatus, wherein the apparatus comprises a module configured to perform the method according to any one of claims 1 to 20.

**22.** A communication apparatus, comprising a processor and a communication interface, wherein the communication interface is configured to receive a signal from an apparatus other than the communication apparatus and transmit the signal to the processor, or send a signal from the processor to an apparatus other than the communication apparatus, and the processor executes code instructions by using a logic circuit, to implement the method according to any one of claims 1 to 20.

**23.** A computer program product comprising instructions, wherein when the instructions are run by a communication apparatus, the communication apparatus is enabled to perform the method according to any one of claims 1 to 20.

**24.** A computer-readable storage medium, wherein the storage medium stores a computer program or instructions, and when the computer program or the instructions are executed by a communication apparatus, the method according to any one of claims 1 to 20 is implemented.

FIG. 1

First communication
apparatus

Second communication
apparatus

FIG. 2

First communication apparatus

| NAS |
|---|

| RRC | ⟷ | RRC |

| PDCP | ⟷ | PDCP |

| RLC | ⟷ | RLC |

| MAC | ⟷ | MAC |

| PHY | ⟷ | PHY |

Second communication apparatus

FIG. 3

First communication apparatus

S401: **Modulate** M bits by using a constellation diagram, to obtain a first modulation symbol

S402: **Modulate** N bits by using the constellation diagram, to obtain a second modulation symbol

S403: Process (for example, **encrypt**) the first modulation symbol to obtain a fourth modulation symbol

S404: Process (for example, **encrypt**) the second modulation symbol to obtain a fifth modulation symbol

Second communication apparatus

S409: **Demodulate** the second modulation symbol based on the constellation diagram, to obtain the N bits

S408: **Demodulate** the first modulation symbol based on the constellation diagram, to obtain the M bits

S407: Obtain the second modulation symbol based on the fifth modulation symbol (for example, through **decryption**)

S406: Obtain the first modulation symbol based on the fourth modulation symbol (for example, through **decryption**)

S405: Fourth modulation symbol and fifth modulation symbol →

FIG. 4

Vertical axis

a3 ●      a1 ●
1101        0001

Horizontal
axis

a2 ●
0010

FIG. 5

Vertical axis

a13 ●    a14 ●      a1 ●     a2●
1001      1101       0001    0101

a16●    a15 ●      a4●     a3●
1000      1100       0000    0100

Horizontal
axis

a9 ●    a10●      a5●     a6●
1011      1111       0011    0111

a12 ●    a11●      a8 ●     a7●
1010      1110       0010    0110

FIG. 6

Vertical axis

a3 ●
10100101

a1 ●
10101010

Horizontal
axis

a2 ●
01011010

FIG. 7

Vertical axis

a2 ●

ρ

θ

● a1

Horizontal
axis

FIG. 8

First communication
apparatus

Second communication
apparatus

First key

S901: Channel coding

S902: Modulate M bits by using
a constellation diagram, to
obtain a first modulation
symbol, and modulate N bits by
using the constellation diagram,
to obtain a second modulation
symbol

S903: Separately perform
encryption (offset encryption or
phase rotation encryption) on
the first modulation symbol
and the second modulation
symbol

S904: Separately perform IFFT
on the encrypted first
modulation symbol and the
encrypted second modulation
symbol

S905: Separately perform CP
addition on processing results in
S904 to obtain a fourth
modulation symbol and a fifth
modulation symbol

S911: Channel decoding

S910: Separately demodulate
the first modulation symbol
and the second modulation
symbol to obtain the M bits and
the N bits respectively

S909: Separately perform
decryption (offset decryption
or phase rotation decryption)
on processing results in S908
to obtain the first modulation
symbol and the second
modulation symbol

S908: Separately perform FFT
on processing results in S907

S907: Separately perform CP
removal on the fourth
modulation symbol and the
fifth modulation symbol

S906: Fourth modulation symbol
and fifth modulation symbol

FIG. 9

FIG. 10

First communication apparatus

Second communication apparatus

S1101: Maintain a third key

S1102: Generate a first key

S1103: Channel coding

S1113: Channel decoding

S1104: Modulate M bits by using a constellation diagram, to obtain a first modulation symbol

S1112: Demodulate the first modulation symbol to obtain the M bits

S1105: Perform encryption (offset encryption or phase rotation encryption) on the first modulation symbol

S1111: Perform decryption (offset decryption or phase rotation decryption) on a modulation symbol obtained through FFT

S1106: Perform IFFT on the encrypted first modulation symbol

S1110: Perform FFT on a modulation symbol obtained through CP removal

S1107: Perform CP addition on a modulation symbol obtained through IFFT, to obtain a fourth modulation symbol

S1109: Perform CP removal on the fourth modulation symbol

S1108: Fourth modulation symbol

FIG. 11

Transceiver module
1201

Communication
apparatus
1200

Processing module
1202

FIG. 12

Communication
apparatus
1300

Processor
1301

1304

Memory
1303

Communication interface
1302

FIG. 13

## INTERNATIONAL SEARCH REPORT

| International application No. |
| --- |
| **PCT/CN2024/086583** |

| A. | CLASSIFICATION OF SUBJECT MATTER |
| --- | --- |

H04L 27/36(2006.01)i

According to International Patent Classification (IPC) or to both national classification and IPC

| B. | FIELDS SEARCHED |
| --- | --- |

Minimum documentation searched (classification system followed by classification symbols)

IPC:H04L 27/-

Documentation searched other than minimum documentation to the extent that such documents are included in the fields searched

Electronic data base consulted during the international search (name of data base and, where practicable, search terms used)

CNABS: CNTXT; CNKI; 万方, WANFANG; 百度, BAIDU: 横轴, 实部轴, X轴, I轴, 同相分量, 纵轴, 虚部轴, Y轴, Q轴, 正交分量, 对称, 对应, 星座图, 星座点, 星座映射, 星座模式, 调制, 随机, 密钥, 加密, 无规律, 安全, 窃听, 非法解调 VEN; WOTXT; USTXT; EPTXT; IEEE; 3GPP: Horizontal axis, X axis, I axis, in-phase component, vertical axis, imaginary axis, Y axis, Q axis, quadrature component, symmetry, correspondence, constellation, modulation, random, irregular, security, demodulation, encrypt+, decrypt+, key

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 101867552 A (TSINGHUA UNIVERSITY) 20 October 2010 (2010-10-20) description, paragraphs [0051]-[0067] | 1-24 |
| Y | CN 114189318 A (HUAWEI TECHNOLOGIES CO., LTD.) 15 March 2022 (2022-03-15) description, paragraphs [0131]-[0133], and figure 4 | 1-24 |
| A | CN 105916139 A (XI'AN JIAOTONG UNIVERSITY) 31 August 2016 (2016-08-31) entire document | 1-24 |
| A | CN 115694629 A (CHINA TELECOM CORP., LTD.) 03 February 2023 (2023-02-03) entire document | 1-24 |
| A | US 2021203363 A1 (NIPPON TELEGRAPH AND TELEPHONE CORP.) 01 July 2021 (2021-07-01) entire document | 1-24 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 June 2024** | **12 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/086583**

| Patent document cited in search report | | | Publication date (day/month/year) | Patent family member(s) | | | Publication date (day/month/year) |
|---|---|---|---|---|---|---|---|
| CN | 101867552 | A | 20 October 2010 | None | | | |
| CN | 114189318 | A | 15 March 2022 | WO | 2022057568 | A1 | 24 March 2022 |
| | | | | US | 2023224083 | A1 | 13 July 2023 |
| CN | 105916139 | A | 31 August 2016 | CN | 105916139 | B | 12 April 2019 |
| CN | 115694629 | A | 03 February 2023 | None | | | |
| US | 2021203363 | A1 | 01 July 2021 | US | 11671119 | B2 | 06 June 2023 |
| | | | | WO | 2019225343 | A1 | 28 November 2019 |
| | | | | JP | 2019205067 | A | 28 November 2019 |

Form PCT/ISA/210 (patent family annex) (July 2022)

**REFERENCES CITED IN THE DESCRIPTION**

**Patent documents cited in the description**

- CN 202310503376